(19) Europäisches Patentamt
European Patent Office
Office européen des brevets

(11) **EP 2 463 326 A1**

(12) **EUROPEAN PATENT APPLICATION**
published in accordance with Art. 153(4) EPC

(43) Date of publication:
**13.06.2012 Bulletin 2012/24**

(21) Application number: **10806443.7**

(22) Date of filing: **03.08.2010**

(51) Int Cl.:
***C08G 81/00*** *(2006.01)* ***C08G 65/34*** *(2006.01)*
***C08G 75/23*** *(2006.01)* ***H01B 1/06*** *(2006.01)*
***H01M 8/02*** *(2006.01)* ***H01M 8/10*** *(2006.01)*

(86) International application number:
**PCT/JP2010/063077**

(87) International publication number:
**WO 2011/016444 (10.02.2011 Gazette 2011/06)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **03.08.2009 JP 2009180552**
**03.08.2009 JP 2009180553**

(71) Applicant: **Toyo Boseki Kabushiki Kaisha**
**Osaka-shi, Osaka 530-8230 (JP)**

(72) Inventors:
- **ICHIMURA,Shunsuke**
  **Ohtsu-shi**
  **Shiga 520-0292 (JP)**
- **IWAHARA,Ryouhei**
  **Ohtsu-shi**
  **Shiga 520-0292 (JP)**
- **KITAMURA,Kouta**
  **Ohtsu-shi**
  **Shiga 520-0292 (JP)**
- **YAMASHITA,Masahiro**
  **Ohtsu-shi**
  **Shiga 520-0292 (JP)**

(74) Representative: **Müller-Boré & Partner**
**Patentanwälte**
**Grafinger Straße 2**
**81671 München (DE)**

# (54) NOVEL SULFONIC ACID GROUP-CONTAINING SEGMENTED BLOCK COPOLYMER AND USE THEREOF

(57) Disclosed is a proton exchange membrane for use in fuel cells, which not only has improved proton conductivity and resistance to swelling caused by hot water but also has greater durability when used in a fuel cell, as well as a sulfonic acid group-containing segmented block copolymer constituting the proton exchange membrane, a membrane electrode assembly using the proton exchange membrane, and a fuel cell using the membrane electrode assembly. A sulfonic acid group-containing segmented block copolymer, which is a di- or multi-block copolymer including, within a molecule, at least one kind of hydrophilic segment and at least one kind of hydrophobic segment, a 0.5 g/dL solution thereof dissolved in N-methyl-2-pyrrolidone as a solvent showing a logarithmic viscosity measured at 30°C in the range of 0.5 to 5.0 dL/g, wherein the copolymer has at least one kind of hydrophobic segment represented by Chemical Formula 1, the segment has a structure bound to a group represented by Chemical Formula 2, and the hydrophilic segment has at least one kind of structure represented by Chemical Formula 3 or Chemical Formula 3-2.

FIG.1

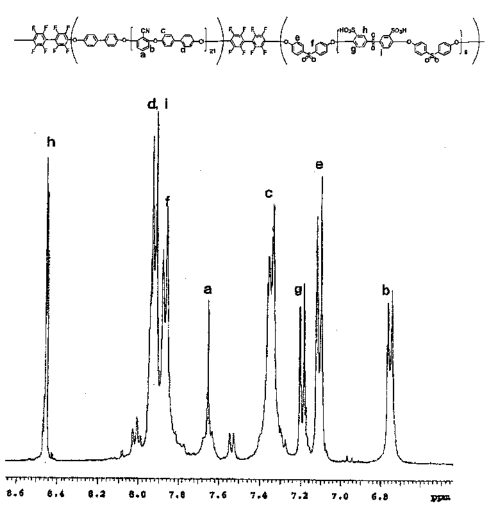

EP 2 463 326 A1

**Description**

TECHNICAL FIELD

The present invention relates to a sulfonic acid group-containing segmented block copolymer having a novel structure and use thereof. Further, the present invention relates to a proton exchange membrane for use in fuel cells and a fuel cell using the polymer.

BACKGROUND ART

Polymer electrolyte fuel cells (PEFC) using a polymer membrane as a proton exchange membrane and direct methanol fuel cells (DMFC) have been progressively applied to automobiles, distributed power generation systems for domestic use, and power sources for portable devices because they have portability and capability of miniaturization. Currently, as a proton exchange membrane, perfluorocarbon sulfonic acid polymer membranes represented by Nafion (registered trade name) available from Du Pont in U.S. are widely used.
However, the operation temperature of these membranes is limited to not higher than 80°C because they will soften at 100°C or higher. Since various merits including energy efficiency, miniaturization of the device and improvement of catalyst activity are obtained by elevating the operation temperature, proton exchange membranes having higher heat resistance are demanded. As a heat resistant proton exchange membrane, sulfonated polymers obtained by treating a heat resistant polymer such as polysulfone or polyether ketone with a sulfonating agent such as fuming sulfuric acid are well known (see for example, Non-patent document 1). However, it is generally difficult to control the sulfonating reaction by a sulfonating agent. Accordingly, the problems arise that the degree of sulfonation is too high or too low, decomposition of polymer and nonuniform sulfonation are likely to occur.
For this reason, it is discussed to use a polymer polymerized from a monomer having an acidic group such as a sulfonic acid group, as a proton exchange membrane. For example, Patent document 1 shows, as a proton conductivity polymer, 4,4'-dichlorodiphenylsulfone-3,3'-disulfonic acid soda, and a copolymer obtained by reaction between 4,4'-dichlorodiphenylsulfone and 4,4'-biphenol. As for a proton exchange membrane constituted by this polymer, nonuniformity of sulfonic acid group as observed in the case of using a sulfonating agent described above is little observed, and it is easy to control the sulfonic acid group introducing amount and the polymer molecular weight. However, for making it into practical use as a fuel cell, improvements of various characteristics including proton conductivity are desired.
As an attempt to improve characteristics, a segmented block copolymer having a sulfonic acid group is discussed. For the segmented block copolymer, it is expected that the proton conductivity is improved by a hydrophilic segment forming a hydrophilic domain by phase separation. For example, Patent document 2 describes a sulfonated polyether sulfone segmented block copolymer. One method of obtaining this polymer is sulfonation of a block polymer including a segment that is easily sulfonated, and a segment that is difficult to be sulfonated. However, in this method, the sulfonation reaction occurs locally by difference in electron density of benzene ring in each segment, and there is a drawback that the polymer structure in each segment is limited. While a benzene ring to which an electron donating group such as an oxygen atom in an ether group or an alkyl group binds is easily sulfonated, reverse reaction due to heat or hydrolysis is also easy to occur. Accordingly, the aforementioned polymer also faces the problem that the stability of a sulfonic acid group in the polymer is low. While a separation membrane is recited as a use application of the polymer, a use application as a proton exchange membrane for use in fuel cells is not described. In Patent document 3, electrolytes having high radical resistance selected according to HOMO value of repeating unit of electrolyte determined by computational chemistry are described, however, durability when it is used as a proton exchange membrane in a fuel cell is not described. When it is used in a fuel cell, the factors that deteriorate the proton exchange membrane include chemical factors such as radical and physical factors such as heat, expansion and contraction, and durability in the case of using it in a fuel cell is not satisfied only by improving the radical resistance.
Patent document 4 describes using a polymer obtained by sulfonating a segmented block copolymer having a specific repeating unit, as a proton exchange membrane of a fuel cell. However, this polymer also uses difference in reactivity to sulfonation as is the same with the polymer of Patent document 2, so that the structure of the hydrophobic segment is limited.
As other examples of sulfonated segmented block copolymer, polymers described in Patent document 5 are recited. The polymers in Patent document 5 have a feature in that the sequence of the main chain in a block transition part is as same as that inside the block, and hence, the polymer structure is limited.
Also in Patent document 6, a proton exchange membrane for use in fuel cells using a sulfonated polyether sulfone segmented block copolymer is described.
However, when these sulfonated block copolymers are used as a proton exchange membrane for use in fuel cells, there is a drawback that stability under high temperature or high humidity is still insufficient. As described above, since a sulfonic acid group introduced into a polymer by sulfonation is poor in stability, there is a drawback that it easily

detaches under a high temperature and high humidity environment, which is a condition for use in fuel cells. Further, there is a drawback that the hydrophilic domain is significantly swelled under high temperature and high humidity, and a decrease in strength is significant. These drawbacks are ascribable to the structure of each segment in the polymer, and in conventional segmented block copolymers, the structure is limited and optimization as a material for a proton exchange membrane for use in fuel cells is not achieved.

As a polymer used for a proton exchange membrane for use in fuel cells, a sulfonated polyether sulfone segmented block copolymer containing halogen in a repeating unit is described in Patent document 7 or 8. However, some of these polymers have high swellability, and when such a polymer is used in a fuel cell, a problem in durability may arise. Also, since many of monomers containing a halogen element are difficult to be synthesized or expensive, there is a problem that the polymer synthesis is accompanied by a lot of difficulties. Further, since a large amount of halogen elements are contained in the polymer, a harmful gas is generated when it is incinerated, and there is still a problem of disposal.

As a polymer used for a proton exchange membrane for use in fuel cells, a sulfonated polyether sulfone segmented block copolymer including a structure having a halogen element such as fluorine at the terminal end of a specific segment is described in Patent document 9 or Non-patent document 2. In these polymers, since the constituting unit containing a halogen element exists only in a bond part between different kinds of segments, there is a merit that the amount of halogen in a molecule is reduced. However, there are some polymers having high swellability depending on the structure of a hydrophobic segment substantially not having a segment structure, in particular, a sulfonic acid group, and when such polymers are used in a fuel cell, problem in durability may arise.

To the present, we have invented, as a polymer used for a proton exchange membrane for use in fuel cells, a sulfonated polyether sulfone segmented block copolymer wherein each segment has a specific structure as a sulfonated polyether sulfone segmented block copolymer with little swellability, and applied for a patent (see Patent document 10). In this application, a polymer containing a benzonitrile structure in a hydrophobic segment is disclosed. However, in the polymer described in the aforementioned application, there is a problem that one having a long chain length of segment is difficult to be obtained, and it is especially difficult in a polymer having a benzonitrile structure.

As for the sulfonated block copolymer, we have made studies, in particular, for the segment structure, and found that a sulfonated block polymer that is obtained by controlling the chain length of the hydrophobic segment having a benzonitrile structure, and using a group having a specific structure as a connecting group between segments has particularly excellent in dimension stability in the area direction at the time of water absorption, and applied for a patent (see Patent document 11). In this application, we have showed that a fuel cell using a proton exchange membrane formed of the aforementioned polymer is more excellent in durability than a fuel cell using a proton exchange membrane of a sulfonated block copolymer having a structure outside the scope of the application. However, there is still a strong demand for longer service life for a fuel cell, and higher durability is requested.

CITATION LIST

PATENT LITERATURE

PTL1: U.S. Patent Application Publication No. 2002/0091225
PTL 2: Japanese Patent Laying-Open No. 63-258930
PTL 3: Japanese Patent Laying-Open No. 2006-291046
PTL 4: Japanese Patent Laying-Open No. 2001-250567
PTL 5: Japanese Patent Laying-Open No. 2001-278978
PTL 6: Japanese Patent Laying-Open No. 2003-31232
PTL 7: Japanese Patent Laying-Open No. 2004-190003
PTL 8: National Patent Publication No. 2007-515513
PTL 9: Japanese Patent Laying-Open No. 2005-126684
PTL 10: Japanese Patent Laying-Open No. 2006-176666
PTL 11: International Application PCT/JP2009/058665


NON PATENT LITERATURE

NPL 1: F. Lufrano and other three persons, "Sulfonated Polysulfone as Promising Membranes for Polymer Electrolyte Fuel Cells", Journal of Applied Polymer Science, U.S., John Wiley & Sons, Inc., 2000, vol. 77, p.1250-1257

NPL 2: Hae-Seung Lee, Abhishek Roy, Ozma Lane, Stuart Dunn, and James E. McGrath, "Hydrophilic-hydrophobic multiblock copolymers based on poly(arylene ether sulfone) via low-temperature coupling reactions for proton exchange membrane fuel cells", Polymer, U.S., Elsevier Ltd., 2008, vol.49, p.715-723

## SUMMARY OF INVENTION

### TECHNICAL PROBLEM

It is a primary object of the present invention to provide a proton exchange membrane for use in fuel cells, which not only has improved proton conductivity and resistance to swelling caused by hot water but also has greater durability when used in a fuel cell, in comparison with a proton exchange membrane obtained by an existing polymer, as well as a sulfonic acid group-containing segmented block copolymer constituting the proton exchange membrane, a membrane electrode assembly using the proton exchange membrane, and a fuel cell using the membrane electrode assembly.

### SOLUTION TO PROBLEM

The present Inventors have made diligent efforts for improving the durability, and found that the structure of a hydrophilic segment is closely related with the durability of a proton exchange membrane in a fuel cell. As a result of studies focusing on the polymer structure constituting the hydrophilic segment, they have found that voltage drop during continuous operation of a fuel cell can be suppressed in a certain limited range of structure, in comparison with conventional cases, and accomplished the present invention.

To be more specific, a first aspect of the present invention is:

(1) A sulfonic acid group-containing segmented block copolymer, which is a di- or multi-block copolymer comprising, within a molecule, at least one kind of hydrophilic segment and at least one kind of hydrophobic segment, a 0.5 g/dL solution thereof dissolved in N-methyl-2-pyrrolidone as a solvent showing a logarithmic viscosity measured at 30°C in the range of 0.5 to 5.0 dL/g, wherein

the copolymer has at least one kind of hydrophobic segment represented by Chemical Formula 1 described below:

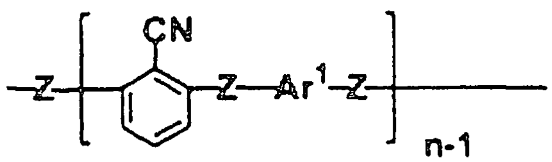

(Chemical Formula 1)

(wherein, Z independently represents an O or S atom, $Ar^1$ represents a divalent aromatic group, and n represents a number of 2 to 100),

the segment has a structure bound to a group represented by Chemical Formula 2 described below:

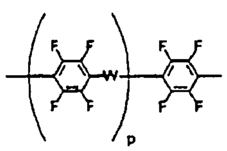

(Chemical Formula 2)

(wherein, p represents 0 or 1, and when p is 1, W represents at least one kind of group selected from the group consisting of a direct bond between benzene rings, a sulfone group, and a carbonyl group), and

the hydrophilic segment has at least one kind of structure represented by Chemical Formula 3-1 described below:

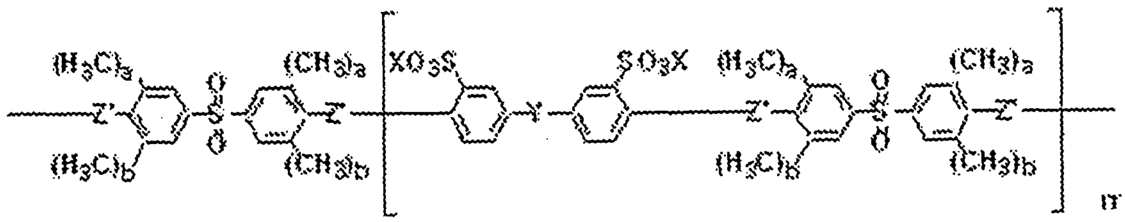

(Chemical Formula 3-1)

(wherein, X represents H or a monovalent positive ion, Y represents a sulfone group or a carbonyl group, Z' independently represents an O or S atom, m represents an integer of 2 to 100, a represents 0 or 1, and b represents 0 or 1).

(2) The sulfonic acid group-containing segmented block copolymer according to (1), wherein both a and b are 0.

(3) The sulfonic acid group-containing segmented block copolymer according to (1) or (2), wherein $Ar^1$ is a structure represented by Chemical Formula 4 described below:

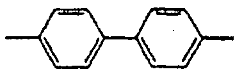

(Chemical Formula 4)

A second aspect of the present invention is:

(4) A sulfonic acid group-containing segmented block copolymer, which is a di- or multi-block copolymer comprising, within a molecule, at least one kind of hydrophilic segment and at least one kind of hydrophobic segment, a 0.5 g/dL solution thereof dissolved in N-methyl-2-pyrrolidone as a solvent showing a logarithmic viscosity measured at 30°C in the range of 0.5 to 5.0 dL/g, wherein the copolymer has at least one kind of hydrophobic segment represented by Chemical Formula 1 described below:

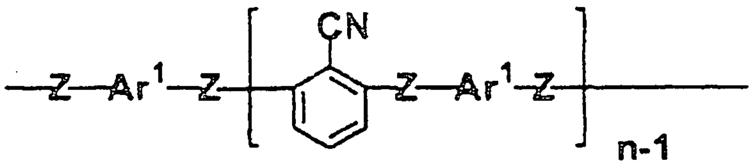

(Chemical Formula 1)

(wherein, Z independently represents an O or S atom, $Ar^1$ represents a divalent aromatic group, and n represents a number of 2 to 100),

the segment has a structure bound to a group represented by Chemical Formula 2 described below:

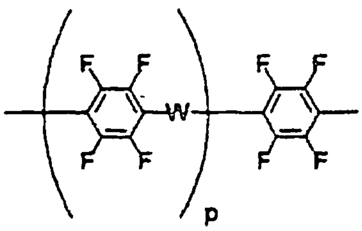

(Chemical Formula 2)

(wherein, p represents 0 or 1, and when p is 1, W represents at least one kind of group selected from the group consisting of a direct bond between benzene rings, a sulfone group, and a carbonyl group), and

the hydrophilic segment has at least one kind of structure represented by Chemical Formula 3-2 described below:

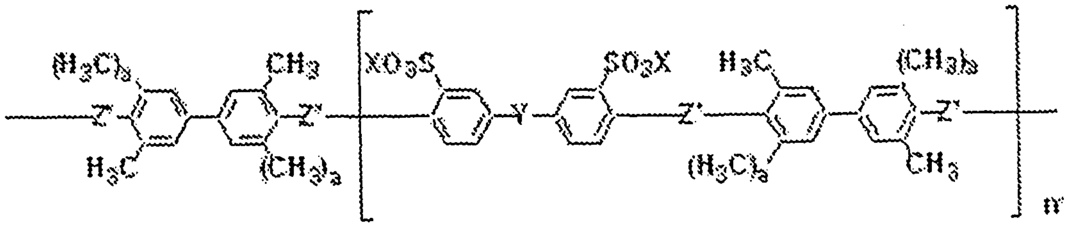

(Chemical Formula 3-2)

(wherein, X represents H or a monovalent positive ion, Y represents a sulfone group or a carbonyl group, Z' independently represents an O or S atom, m represents a number of 2 to 100, and a represents 0 or 1).

(5) The sulfonic acid group-containing segmented block copolymer according to (4), wherein a is 1.

(6) The sulfonic acid group-containing segmented block copolymer according to (4) or (5), wherein $Ar^1$ is a structure represented by Chemical Formula 4 described below:

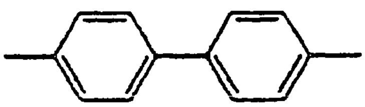

(Chemical Formula 4)

(7) The sulfonic acid group-containing segmented block copolymer according to any one of (1) to (6), wherein at least either of Z and Z' is an O atom.

(8) The sulfonic acid group-containing segmented block copolymer according to (7), wherein both Z and Z' are O atoms.

(9) The sulfonic acid group-containing segmented block copolymer according to any one of (1) to (8), wherein W is a direct bond between benzene rings.

(10) The sulfonic acid group-containing segmented block copolymer according to (1) to (9), wherein n is in the range of 8 to 50.

(11) The sulfonic acid group-containing segmented block copolymer according to (10), wherein m is in the range of 3 to 20.

(12) The sulfonic acid group-containing segmented block copolymer according to (11), wherein both an average value of number average molecular weight of hydrophilic segment (A) and an average value of number average molecular weight of hydrophobic segment (B) are in the range of 3000 to 12000, and A/B is in the range of 0.7 to 1.3.

(13) A proton exchange membrane for use in fuel cells comprising the sulfonic acid group-containing segmented block copolymer according to any one of (1) to (12).

(14) A membrane electrode assembly using the proton exchange membrane for use in fuel cells according to (13).

(15) A fuel cell using the membrane electrode assembly according to (14).

ADVANTAGEOUS EFFECTS OF INVENTION

The sulfonic acid group-containing segmented block copolymer of the present invention is not only excellent in resistance to swelling caused by hot water, in comparison with a sulfonated block copolymer outside the present invention, but also particularly excellent in durability when it is used as a proton exchange membrane in a fuel cell, namely suppression of a decrease in output during continuous operation.

BRIEF DESCRIPTION OF DRAWINGS

Fig. 1 shows a $^1$H-NMR spectrum of the sulfonic acid group-containing segmented block polymer obtained in Example 1. Peaks a to i in the drawing belong to protons a to i in the Chemical Formula.

Fig. 2 shows a $^1$H-NMR spectrum of the sulfonic acid group-containing segmented block polymer obtained in Example 13. Peaks a to g in the drawing belong to protons a to g in the chemical formula.

DESCRIPTION OF EMBODIMENTS

The present invention provides a sulfonic acid group-containing segmented block copolymer having a specific polymer structure, and use thereof, and in the following, the present invention will be described more specifically by way of embodiments.

The molecular weight of the sulfonic acid group-containing segmented block copolymer of the present invention is in the range of 0.5 to 5.0 dL/g by logarithmic viscosity measured at 30°C for a 0.5 g/dL solution in N-methyl-2-pyrrolidone as a solvent. The logarithmic viscosity not more than 0.5 g/dL is not preferred because the formability is poor, and it becomes difficult to form a membrane or the like. Further, the logarithmic viscosity not less than 5.0 g/dL is not preferred because the viscosity of the solution is too high, and an adverse effect is exerted on the workability. The logarithmic viscosity is more preferably in the range of 1.0 to 4.0 dL/g, and further preferably in the range of 1.5 to 3.5 dL/g.

The sulfonic acid group-containing segmented block copolymer of the present invention is a di- or multi-block polymer having, within a molecule, at least one kind of hydrophilic segment, one kind of hydrophobic segment, and a binding group. It is preferably a multi-block polymer because the strength of a membrane formed therefrom is improved. The hydrophilic segment and the hydrophobic segment may be mutually bound via the binding group. The mode of binding between segments may be binding between the same kind of segments, or binding between different kinds of segments. For example, the hydrophilic segment and the hydrophobic segment may be connected alternately, or each segment may be connected at random. However, since the hydrophilic segment is highly water-soluble, a polymer including only hydrophilic segments may possibly lead a problem of elution when it is used as a proton exchange membrane. Therefore, the sulfonic acid group-containing segmented block copolymer of the present invention needs to contain a hydrophilic segment and a hydrophobic segment in a molecule.

The structure of the hydrophobic segment in the sulfonic acid group-containing segmented block copolymer of the present invention needs to be at least one kind of structure selected from the group represented by Chemical Formula 1 described below:

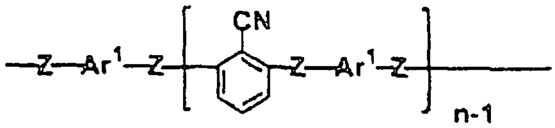

(Chemical Formula 1)

(wherein, Z independently represents either an O or S atom, $Ar^1$ represents a divalent aromatic group, and n represents a number of 2 to 100) for development of resistance to swelling caused by dipping in hot water. $Ar^1$ may be any known divalent aromatic group including mainly a group having aromaticity, and preferred examples thereof include at least one kind of divalent aromatic group selected from the group represented by Chemical Formulas 5A to 5P described below.

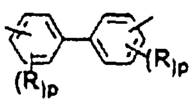
(Chemical Formula 5A)

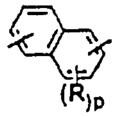
(Chemical Formula 5B)

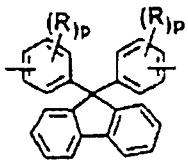
(Chemical Formula 5C)

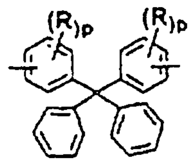
(Chemical Formula 5D)

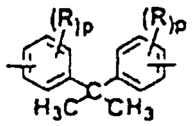
(Chemical Formula 5E)

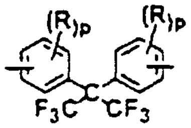
(Chemical Formula 5F)

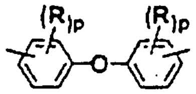
(Chemical Formula 5G)

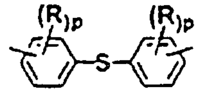
(Chemical Formula 5H)

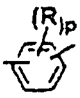
(Chemical Formula 5I)

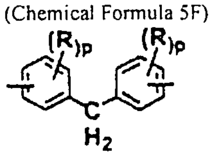
(Chemical Formula 5J)

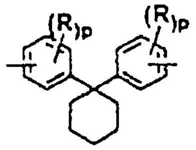
(Chemical Formula 5K)

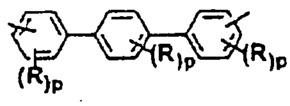
(Chemical Formula 5L)

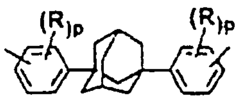
(Chemical Formula 5M)

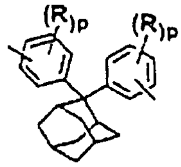
(Chemical Formula 5N)

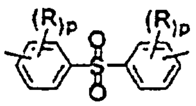
(Chemical Formula 5O)

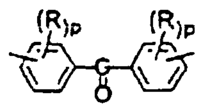
(Chemical Formula 5P)

(wherein, R represents a methyl group, and p represents an integer of 0 to 2.)

Since a polymer wherein p is 1 or 2 may be difficult to give a polymer of high molecular weight, p is preferably 0. As $Ar^1$, among Chemical Formulas 5A to 5P described above, the structures represented by Chemical Formulas 5A, 5C, 5E, 5F, 5K, 5M and 5N are more preferred, the structures represented by Chemical Formulas 5A' and 5F' shown below are further preferred, and the structure represented by Chemical Formula 5A' is still further preferred. $Ar^1$ may include two or more kinds of structures selected from the structures represented by Chemical Formulas 5A to 5P described above. In that case, for showing more excellent characteristics, it preferably has at least either of the structures represented by Chemical Formulas 5A', 5F' and 5M' described below, and Chemical Formula 5A' or 5M' described below is more preferred. The structure of Chemical Formula 5A' is preferred because resistance to swelling and durability are excellent. The structure of Chemical Formula 5M' is preferred because durability is excellent.

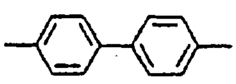
(Chemical Formula 5A')

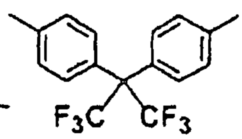
(Chemical Formula 5F')

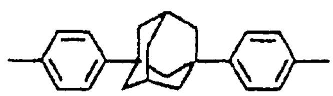
(Chemical Formula 5M')

In Chemical Formula 1, Z is preferably an O atom from the viewpoints of availability of the raw material and ease of synthesis. However, when it is a S atom, oxidation resistance may be improved.

In Chemical Formula 1, n represents a number of 2 to 100. Taking each segment into consideration, n should be an integer, however, when there is a distribution in molecular weight of segment within a molecule or between molecules, n is not necessary an integer when the average value thereof is taken as n. For defining the structure of a polymer, it is substantially effective to describe by an average value. n may be determined by any known method such as an NMR method or a gel permeation chromatography method. n is more preferably in the range of 5 to 70, and n is further preferably in the range of 8 to 50, and n is still further preferably in the range of 12 to 40 because the proton conductivity and the durability, when it is formed into a proton exchange membrane, are further improved. When n is less than 10, the swellability may be too large or the durability may decrease. When it exceeds 70, it becomes difficult to control the molecular weight, and it may become difficult to synthesize a polymer having a designed structure.

In the sulfonic acid group-containing segmented block copolymer of the present invention, segments are bound

by a group represented by Chemical Formula 2 described below:

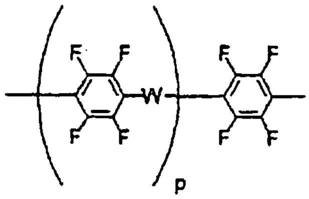

(Chemical Formula 2)

(wherein, p represents 0 or 1, and when p is 1, W represents at least one kind of group selected from the group consisting of a direct bond between benzene rings, a sulfone group, and a carbonyl group). Since synthesis becomes somewhat difficult when p is 0, p is preferably 1. W is preferably a direct bond between benzene rings because characteristics and durability of a membrane can be improved. When W is a sulfone group, there is a merit of reducing the side reaction during the synthesis.

The sulfonic acid group-containing segmented block copolymer according to the first aspect of the present invention has a feature in that the hydrophilic segment is at least one kind of structure selected from the group represented by Chemical Formula 3-1 described below:

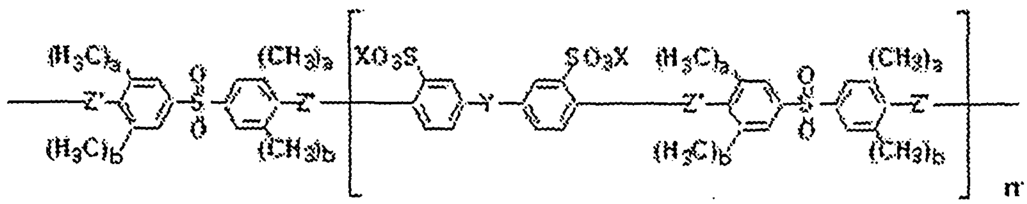

(Chemical Formula 3-1)

(wherein, X represents H or a monovalent positive ion, Y represents a sulfone group or a carbonyl group, Z' independently represents an O or S atom, m represents an integer of 2 to 100, a represents 0 or 1, and b represents 0 or 1). In Chemical Formula 3, when it is used as a proton exchange membrane, X is preferably H because the proton conductivity increases. In processing and forming a polymer, X is preferably a monovalent metal ion such as Na, K, or Li because stability of the polymer is improved. X may be an organic cation such as monoamine. In Chemical Formula 3, Z is preferably an O atom from the viewpoints of availability of the raw material and ease of synthesis. However, when it is a S atom, oxidation resistance may be improved. In Chemical Formula 3, Y is preferably a sulfone group because dissolubility of the polymer to a solvent tends to increase.

In Chemical Formula 3-1, a and b are preferably 0 because synthesis is facilitated. When a or b is 1, synthesis may become difficult due to, for example a decrease in reactivity of a monomer, which is a raw material, although the durability is improved. m represents a number of 2 to 100. Taking each segment into consideration, m should be an integer, however, when there is a distribution in molecular weight of segment within a molecule or between molecules, m is not necessary an integer when the average value thereof is taken as m. For defining the structure of a polymer, it is substantially effective to describe by an average value. m may be determined by any known method such as an NMR method or a gel permeation chromatography method. m is preferably in the range of 3 to 60. When m is not more than 3, the proton conductivity may decrease. When m is not less than 60, synthesis may be difficult. m is preferably in the range of 3 to 30, more preferably in the range of 3 to 25 for improving the durability, and further preferably in the range of 3 to 20.

The sulfonic acid group-containing segmented block copolymer according to the second aspect of the present invention has a feature in that the hydrophilic segment has at least one kind of structure selected from the group represented by Chemical Formula 3-2 described below:

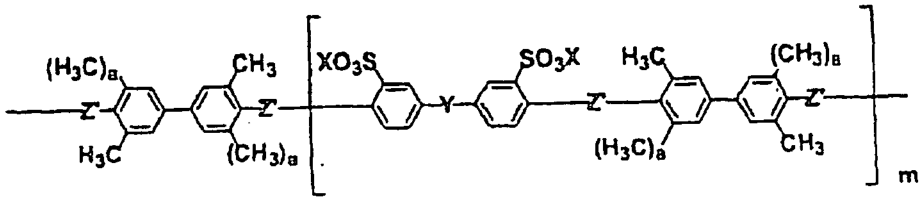

(Chemical Formula 3-2)

(wherein, X represents H or a monovalent positive ion, Y represents a sulfone group or a carbonyl group, Z' independently represents an O or S atom, m represents an integer of 2 to 100, and a represents 0 or 1). In Chemical Formula 3, when it is used as a proton exchange membrane, X is preferably H because the proton conductivity increases. In processing and forming a polymer, X is preferably a monovalent metal ion such as Na, K, or Li because stability of the polymer is improved. X may be an organic cation such as monoamine. In Chemical Formula 3, Z is preferably an O atom from the viewpoints of availability of the raw material and ease of synthesis. However, when it is a S atom, oxidation resistance may be improved. In Chemical Formula 3, Y is preferably a sulfone group because dissolubility of the polymer to a solvent tends to increase.

In Chemical Formula 3-2, a is preferably 1 because the durability is improved. m represents a number of 2 to 100. Taking each segment into consideration, m should be an integer, however, when there is a distribution in molecular weight of segment within a molecule or between molecules, m is not necessary an integer when the average value thereof is taken as m. For defining the structure of a polymer, it is substantially effective to describe by an average value. m may be determined by any known method such as an NMR method or a gel permeation chromatography method. m is preferably in the range of 3 to 60. When m is not more than 3, the proton conductivity may decrease. When m is not less than 60, synthesis may be difficult. m is preferably in the range of 5 to 30, more preferably in the range of 5 to 20 for improving the durability, and further preferably in the range of 5 to 15.

In the sulfonic acid group-containing segmented block copolymer of the present invention, it is preferred that an average value of number average molecular weight of hydrophilic segment (A) and an average value of number average molecular weight of hydrophobic segment (B) are respectively in the range of 3000 to 12000, and A/B is in the range of 0.7 to 1.3 because excellent characteristics such as durability and proton conductivity are realized. A/B is more preferably 0.8 to 1.2. The molecular weight of each segment may be determined by any known method such as molecular weight measurement of each oligomer by an NMR method or a gel permeation chromatography method.

The sulfonic acid group-containing segmented block copolymer of the present invention may be synthesized by any known method. It may be synthesized by binding oligomers that are to be hydrophilic and hydrophobic segments synthesized in advance by means of a coupling agent. As an example, a method of binding oligomers with a hydroxyl group terminal by a perfluoro aromatic compound such as decafluorobiphenyl can be recited. In this case, it is preferred that the molar ratio between the perfluoro aromatic compound such as decafluorobiphenyl, and both oligomers is nearly 1.

Synthesis may be conducted by modifying either of the terminal groups of oligomers that are to be hydrophilic and hydrophobic segments synthesized in advance with a highly reactive group such as the aforementioned perfluoro aromatic compound including decafluorobiphenyl, and reacting the other of the oligomers. In the above reaction, the oligomer may be used after purification and isolation after synthesis, or may be used in the solution where the oligomer is synthesized, or may be used as a solution of purified and isolated oligomer. While the oligomer that is purified and isolated may be either of oligomers, the oligomer forming the hydrophobic segment is more easily synthesized. In the case of the method including modifying either of the terminal groups of oligomers that are to be hydrophilic and hydrophobic segments synthesized in advance with a highly reactive group, and reacting the other of the oligomers, it is preferred that the modified oligomer and the other of the oligomers are reacted in equivalent moles, however, for preventing gelation by the side reaction during the reaction, preferably, the modified oligomer is somewhat excessive. The degree of excess is preferably in the range of 0.1 to 50 mol%, and more preferably in the range of 0.5 to 10 mol% although it differs depending on the molecular weight of the oligomer and the molecular weight of the intended polymer. The one whose terminal end is modified by a highly reactive group is preferably the hydrophobic segment. Depending on the structure of the hydrophilic segment, the modification reaction may not proceed successfully.

As the perfluoro aromatic compound such as decafluorobiphenyl for binding oligomers or for modifying the terminal end of either one of oligomers, the compounds having the structures represented by Chemical Formulas 6A to 6D may be used, and among these, the compounds of Chemical Formulas 6A and 6B are preferred, and the compound of Chemical Formula 6A is further preferred.

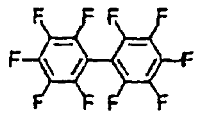 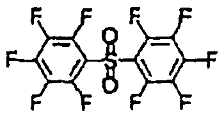 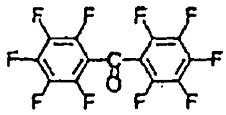 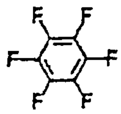

(Chemical Formula 6A) (Chemical Formula 6B) (Chemical Formula 6C) (Chemical Formula 6D)

In the following, examples of a synthesis method of the sulfonic acid group-containing segmented block copolymer of the present invention will be described, however, the scope of the present invention will not be limited by these examples.

<Synthesis of hydrophilic oligomer 1>

The hydrophilic oligomer in the sulfonic acid group-containing segmented block copolymer of the first aspect of the present invention may be synthesized by reacting a sulfonated monomer represented by Chemical Formula 7 described below with bisphenols or bisthiophenols represented by Chemical Formula 8-1 described below.

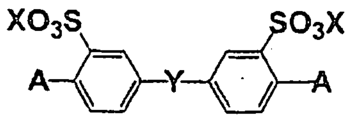 (Chemical Formula 7)

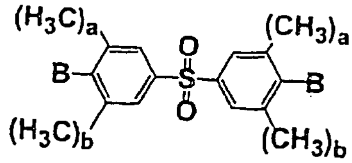 (Chemical Formula 8-1)

In Chemical Formula 7, X represents H or a monovalent positive ion, Y represents a sulfone group or a carbonyl group, and A represents a halogen element. It is preferred that X is Na or K, and A is F or Cl, and F is preferred because reactivity is high and synthesis of the oligomer is facilitated. In Chemical Formula 8-1, a represents 0 or 1, b represents 0 or 1, and B represents an OH group or an SH group, and derivatives thereof. It is preferred that a and b are 0 because synthesis of the polymer is facilitated. When a or b is 1, the durability is improved, however, the reactivity as the monomer decreases, and it may become difficult to synthesize the polymer. B is preferably an OH group or an SH group, and is more preferably an OH group. When B is an SH group, the durability may be improved. When B is an OH group, the material is easily available. In the synthesis of the hydrophilic oligomer, it is preferred that the terminal group of the oligomer is an OH group or an SH group while the bisphenols or various bisthiophenols of Chemical Formula 8-1 are excessive. The degree of the polymerization of the oligomer can be modified by the molar ratio between the monomer of Chemical Formula 7, and the bisphenols or bisthiophenols of Chemical Formula 8-1.

<Synthesis of hydrophilic oligomer 2>

The hydrophilic oligomer in the sulfonic acid group-containing segmented block copolymer of the second aspect of the present invention may be synthesized by reacting the sulfonated monomer represented by Chemical Formula 7 described below with bisphenols or bisthiophenols represented by Chemical Formula 8-2 described below.

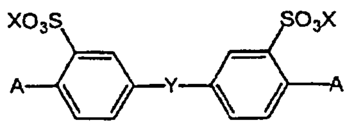 (Chemical Formula 7)

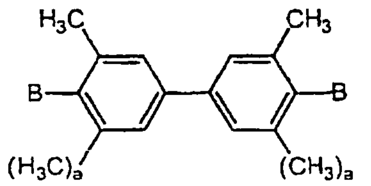

(Chemical Formula 8-2)

In Chemical Formula 7, X represents H or a monovalent positive ion, Y represents a sulfone group or a carbonyl group, and A represents a halogen element. It is preferred that X is Na or K, and A is F or Cl. In Chemical Formula 8-2, a represents 0 or 1, B represents an OH group or an SH group, and derivatives thereof. In Chemical Formula 8-2, a is preferably 1 because the durability is improved. Further, B is preferably an OH group or an SH group, and more preferably an OH group. When B is an SH group, the durability may be improved. When B is an OH group, the material is easily available. In the synthesis of the hydrophilic oligomer, it is preferred that the terminal group of the oligomer is an OH group or an SH group while the bisphenols or various bisthiophenols of Chemical Formula 8 are excessive. The degree of polymerization of oligomer can be modified by the molar ratio between the monomer of Chemical Formula 7, and the bisphenols or bisthiophenols of Chemical Formula 8-2.

While the monomer of Chemical Formula 7, and the bisphenols or bisthiophenols of Chemical Formula 8-1 or Chemical Formula 8-2 may be reacted by any known method, they are preferably reacted by aromatic nucleophilic substitution reaction in the presence of a basic compound. The reaction may be conducted in the range of 0 to 350°C, and preferably conducted in the range of 50 to 250°C. When it is lower than 0°C, the reaction tends not to proceed sufficiently, whereas when it is higher than 350°C, the polymer tends to start decomposing. The reaction may be conducted in the absence of a solvent, but is preferably conducted in a solvent. As the solvent that can be used, N-methyl-2-pyrrolidone, N,N-dimethylacetamide, N,N-dimethylformamide, dimethylsulfoxide, diphenylsulfone, sulfolane and the like can be recited, however, any one that can be used as a stable solvent in aromatic nucleophilic substitution reaction may be used without limited to the aforementioned solvents. These organic solvents may be used alone or as a mixture of two or more kinds. As the basic compound, sodium hydroxide, potassium hydroxide, sodium carbonate, potassium carbonate, sodium bicarbonate, potassium bicarbonate and the like are recited, and any one capable of making aromatic bisphenols or aromatic bisthiophenols into an active phenoxide structure or thiophenoxide structure may be used without limited to these compounds. The calculation of oligomer molecular weight is facilitated by using a potassium salt such as potassium carbonate when X is potassium, and using a sodium salt such as sodium carbonate when X is sodium. Water that is generated as a by-product may be removed outside the system by distillation with an azeotropic solvent such as toluene, or by using a water absorbing material such as molecular sieve, or by distillation with a polymerization solvent. When the aromatic nucleophilic substitution reaction is conducted in a solvent, it is preferred that the monomer is loaded so that the obtained polymer concentration is 5 to 50% by weight, and preferably in the range of 20 to 40% by weight. When it is less than 5% by weight, the degree of polymerization tends to be difficult to increase. On the other hand, when it is more than 50% by weight, the viscosity of the reaction system is too high, and the post treatment of the reactant tends to be difficult. The polymerization solution may be directly used for the synthesis of the block polymer, or may be used as a solution after removal of a by-product such as an inorganic salt, or the polymer may be isolated and purified for use. Since the hydrophilic oligomer is often difficult to be isolated, synthesis is facilitated by directly using the polymerization solution as an oligomer solution. In such a case, it is better to remove a by-product such as an inorganic salt by filtration, centrifugation or the like.

As a method of removing an inorganic salt, a by-product, from the solution of the hydrophilic oligomer, any known method such as filtration, decantation after centrifugation, dissolving in water followed by dialysis, dissolving in water followed by salt precipitation and the like can be used, and filtration is preferred from the viewpoints of production efficiency and yield. When the salt is removed by filtration or centrifugation, the polymer may be collected by adding the solution dropwise into a nonsolvent of the hydrophilic segment. The polymer may be collected by evaporation to dryness in the case of dialysis, and by filtration in the case of salt precipitation. The isolated hydrophilic oligomer is preferably purified by washing with a nonsolvent, reprecipitation, dialysis or the like, and washing is preferred from the viewpoints of operation efficiency and purification efficiency. It is preferred that the organic solvent used in synthesis or purification is removed as much as possible. The removal of the organic solvent is preferably conducted by drying, and is more preferably dried under reduced pressure at a temperature ranging from 10 to 150°C.

The nonsolvent of the hydrophilic oligomer may be selected from any organic solvent, and one that is miscible with the aprotic polar solvent used in the reaction is preferred. Specific examples thereof include ketonic solvents such as acetone, methylethylketone, diethylketone, dibutylketone, dipropylketone, diisopropylketone and cyclohexanone, and alcoholic solvents such as methanol, ethanol, propanol, isopropanol and butanol, and any other appropriate solvent may be used without limited to these examples.

<Synthesis of hydrophobic oligomer>

The hydrophobic oligomer in the sulfonic acid group-containing segmented block copolymer of the present invention is obtained by reacting the monomer represented by Chemical Formula 9A or 9B with various bisphenols or various bisthiophenols.

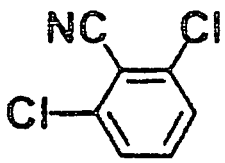

(Chemical Formula 9A)

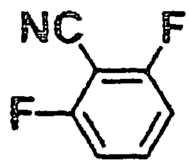

(Chemical Formula 9B)

It is preferred that the terminal group of the oligomer is an OH group or an SH group so that the various bisphenols or various bisthiophenols are excessive. The degree of polymerization of the oligomer may be modified by the molar ratio between the monomer of Chemical Formula 9A or 9B, and the various bisphenols or the various bisthiophenols. While the monomer of Chemical Formula 9A or 9B, and the various bisphenols or the various bisthiophenols may be reacted by any known method, they are preferably reacted by aromatic nucleophilic substitution reaction in the presence of a basic compound. The reaction may be conducted in the range of 0 to 350°C, and preferably conducted in the range of 50 to 250°C. When it is lower than 0°C, the reaction tends not to proceed sufficiently, whereas when it is higher than 350°C, the polymer tends to start decomposing. The reaction may be conducted in the absence of a solvent, but is preferably conducted in a solvent. As the solvent that can be used, aprotic polar solvents such as N-methyl-2-pyrrolidone, N,N-dimethylacetamide, N,N-dimethylformamide, dimethylsulfoxide, diphenylsulfone, and sulfolane can be recited, however, any one that can be used as a stable solvent in aromatic nucleophilic substitution reaction may be used without limited to the aforementioned solvents. These organic solvents may be used alone or as a mixture of two or more kinds. As the basic compound, sodium hydroxide, potassium hydroxide, sodium carbonate, potassium carbonate, sodium bicarbonate, potassium bicarbonate and the like are recited, and any one capable of making aromatic bisphenols or aromatic bisthiophenols into an active phenoxide structure or thiophenoxide structure may be used without limited to these compounds. Water that is generated as a by-product may be removed outside the system by distillation with an azeotropic solvent such as toluene, or by using a water absorbing material such as molecular sieve, or by distillation with a polymerization solvent. When the aromatic nucleophilic substitution reaction is conducted in a solvent, it is preferred that the monomer is loaded so that the obtained polymer concentration is 1 to 20% by weight, and preferably in the range of 5 to 15% by weight. When it is less than 1% by weight, the degree of polymerization tends to be difficult to increase. On the other hand, when it is more than 20% by weight, the reaction may stop by deposition due to the polymer structure.

The hydrophobic oligomer that is obtained by reacting the monomer of Chemical Formula 5A or 5B with the various bisphenols or the various bisthiophenols may be directly used for synthesis of a block polymer, or the compounds of Chemical Formulas 6A to 6D may be reacted with a terminal group derived from the various bisphenols or the various bisthiophenols. This reaction may be conducted after isolating the hydrophobic oligomer, or may be conducted using the reaction solution as it is, and from the viewpoint of simplicity, it is preferred to use the reaction solution as it is. In this case, an inorganic salt or the like that is a by-product of the reaction may be removed by decantation or filtration.

When the compounds of Chemical Formulas 6A to 6D are reacted with a terminal group derived from the various bisphenols or various bisthiophenols of the hydrophobic oligomer, it is preferred that the reaction is conducted using an excess of the compounds of Chemical Formulas 6A to 6D. More preferably, it is preferred that the hydrophobic oligomer is added little by little into a solution containing an excess of the compounds of Chemical Formulas 6A to 6D. The reaction can be more easily controlled by adding the hydrophobic oligomer in the form of a solution. Adding large quantity at once, or shortage of the compounds of Chemical Formulas 6A to 6D may lead gelation of the reaction solution. The solvent used in the reaction may be any solvent in which each ingredient dissolves, and preferred examples thereof include, but are not limited to, aprotic polar solvents such as N-methyl-2-pyrrolidone, N,N-dimethylacetamide, N,N-dimethylformamide, dimethylsulfoxide, diphenylsulfone and sulfolane. When the reactant with the various bisphenols or the various bisthiophenols comes into contact with carbon dioxide in the air, the terminal group is converted from a phenoxide structure or a thiophenoxide structure into a phenol structure or a thiophenol structure, and the reactivity decreases, so that it is preferred to prevent the contact with the air. For isolation, it is preferred to add potassium carbonate, sodium carbonate or the like in an amount of 1 to 5 molar times the phenol or thiophenol terminal end. The reaction temperature is preferably in the range of 50 to 150°C, and more preferably in the range of 70 to 130°C.

As a method of removing an inorganic salt that is a by-product and excess compounds of Chemical Formulas

6A to 6D from the solution of the hydrophobic oligomer whose terminal end is modified with the compounds of Chemical Formulas 6A to 6D, any known method such as dropwise addition of the oligomer into a nonsolvent and washing may be used. As a nonsolvent of the oligomer, water or any organic solvent may be selected. For removing the inorganic salt, water is preferred. For removal of the compounds of Chemical Formulas 6A to 6D, an organic solvent is preferred. While it is preferred to wash with both water and an organic solvent, the subject into which the dropwise addition is conducted first may be either water or an organic solvent. It is preferred that the organic solvent used in synthesis or purification is removed as much as possible. The removal of the organic solvent is preferably conducted by drying, and is more preferably dried under reduced pressure at a temperature ranging from 10 to 150°C.

The organic solvent of the nonsolvent may be selected from any organic solvent, and one that is miscible with the aprotic polar solvent used in the reaction is preferred. Specific examples thereof include ketonic solvents such as acetone, methylethylketone, diethylketone, dibutylketone, dipropylketone, diisopropylketone and cyclohexanone, and alcoholic solvents such as methanol, ethanol, propanol, isopropanol and butanol, and any other appropriate solvent may be used without limited to these examples.

<Synthesis of segmented block copolymer>

A segmented block copolymer may be obtained by reacting a hydrophobic oligomer and a hydrophilic oligomer. As the hydrophobic oligomer and the hydrophilic oligomer, at least one kind of oligomer selected from the group consisting of oligomers having different structures, molecular weights, molecular weight distributions, and terminal groups may be used independently. While the molecular weight of each oligomer may be determined by any known method, it is preferred to determine a number average molecular weight by quantifying the terminal group. While quantification of the terminal group may be conducted using any known method such as titrimetry, a colorimetric method, a labeling method, an NMR method and an elementary analysis, the NMR method is preferred because of its simplicity and excellent accuracy, and a $^1$H-NMR method is more preferred. The hydrophobic oligomer in the present invention is characterized by having a benzonitrile structure, and therefore the structure makes the solubility to a solvent poor. Accordingly, when it is not dissolved in an appropriate deuterated solvent in NMR measurement, it is preferred to conduct measurement while adding a deuterated solvent such as deuterated dimethylsulfoxide into a normal solvent such as N-methyl-2-pyrrolidone in which the hydrophobic oligomer dissolves.

It is preferred that the sulfonic acid group in the hydrophilic oligomer is preferably an alkaline metal salt, and is more preferably Na or K. When the ions that form a salt with the sulfonic acid group are made up of a plural kinds, accurate molecular weight can be determined by analyzing the composition by an elementary analysis in advance. After once treating with excessive acid, treatment with a metal salt or an alkaline metal hydroxide may be conducted. It is preferred that the hydrophilic oligomer is dried directly before synthesis of a block polymer to remove the adsorbed water. The drying may be conducted by heating to 100°C or higher, and drying under reduced pressure is more preferred.

When the hydrophilic oligomer whose terminal group is derived from bisphenol or bisthiophenol, is reacted with the hydrophobic oligomer modified with the compound of Chemical Formulas 6A to 6D, the molar ratio between the hydrophilic oligomer and the hydrophobic oligomer is preferably in the range of 0.9 to 1.1, and more preferably in the range of 0.95 to 1.05. Equivalent moles will increase the degree of polymerization, however, too large degree of polymerization may interfere with the subsequent handling, and hence, it is preferred to appropriately adjust the molar ratio. It is also preferred that the oligomer having a group modified by the compounds of Chemical Formulas 6A to 6D as a terminal end is excessive. It is not preferred that the number of moles of the oligomer having a group modified by the compounds of Chemical Formulas 6A to 6D as a terminal end is extremely small, because gelation reaction may occur.

When the hydrophilic oligomer and the hydrophobic oligomer both having a terminal group derived from bisphenol or bisthiophenol are reacted, a polymer can be obtained by reacting these oligomers and the compounds of Chemical Formulas 6A to 6D. In this case, the molar numbers of the hydrophilic oligomer and hydrophobic oligomer can be appropriately adjusted. Preferably, the entire oligomers and the compounds of Chemical Formulas 6A to 6D are substantially equivalent moles, or the compounds of Chemical Formulas 6A to 6D are somewhat excessive. When the molar number of the oligomers is excessive, gelation may occur.

Reaction between the hydrophilic oligomer and the hydrophobic oligomer is preferably conducted in an aprotic polar solvent such as N-methyl-2-pyrrolidone, N,N-dimethylacetamide, N,N-dimethylformamide, dimethylsulfoxide, diphenylsulfone or sulfolane, in the presence of a basic compound such as potassium carbonate or sodium carbonate in an amount of 1 to 5 molar times the phenol or thiophenol terminal end of the oligomer, preferably in the range of 50 to 150°C, and more preferably in the range of 70 to 130°C. The degree of polymerization may be adjusted by the molar ratio of the oligomer as described above, or polymerization may be stopped by cooling or terminal end stopping while determining the end point from the viscosity or the like of the reaction solution. The reaction is preferably conducted under an inert gas flow such as nitrogen. The solid concentration in the reaction solution may be in the range of 5 to 50% by weight, and is preferably in the range of 5 to 20% by weight because reaction defect may be caused if the hydrophobic oligomer is not dissolved. Whether the hydrophobic oligomer is dissolved or not can be determined by

visually checking whether the solution is transparent or clouded or not.

Isolation and purification of a polymer from the reaction solution may be conducted by any known method. For example, the polymer may be solidified by adding the reaction solution dropwise into a nonsolvent of the polymer such as water, acetone or methanol. Among these, water is preferred because of its ease in handling and capability of removing an inorganic salt. For removing an oligomer ingredient or a highly hydrophilic ingredient, it is preferred to wash with hot water at 60°C to 100°C, or with a mixed solvent of water and an organic solvent (ketonic solvent such as acetone, alcoholic solvent such as methanol, ethanol or isopropanol) or the like. While examples of preferred structures of the segmented block copolymer according to the first aspect of the present invention are shown below, the scope of the present invention is not limited thereto. In the following formulas, X represents H or a monovalent positive ion, and n and m independently represent an integer of 2 to 100.

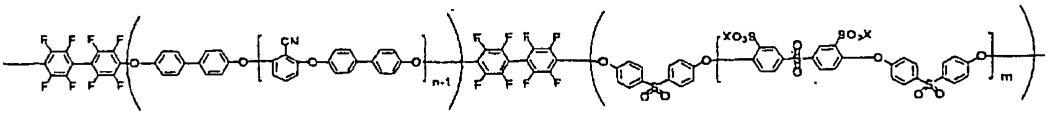

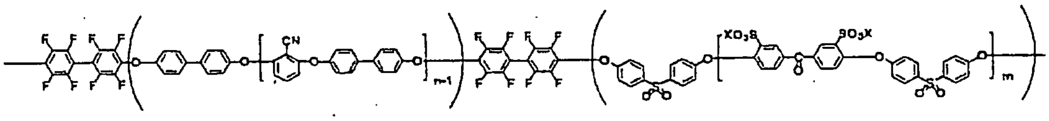

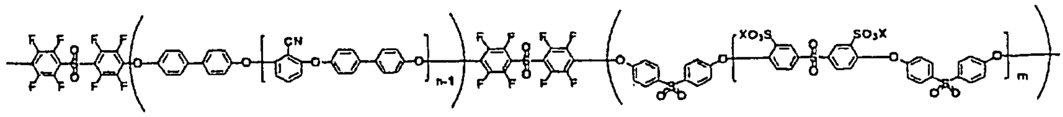

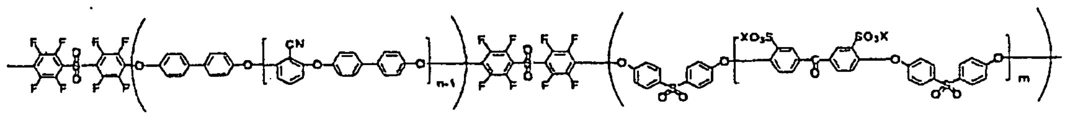

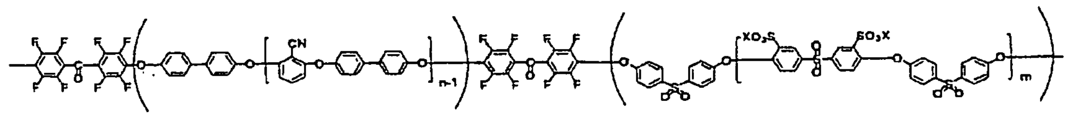

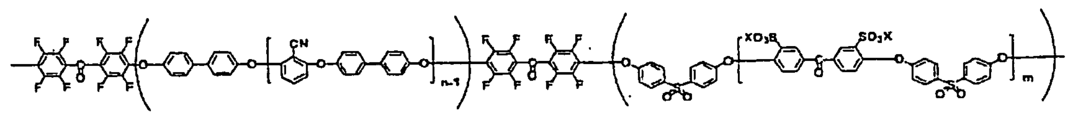

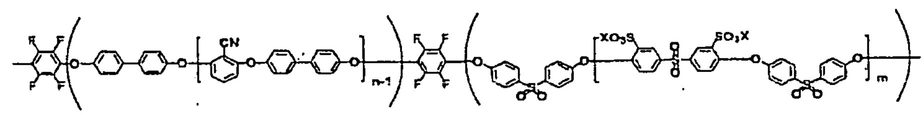

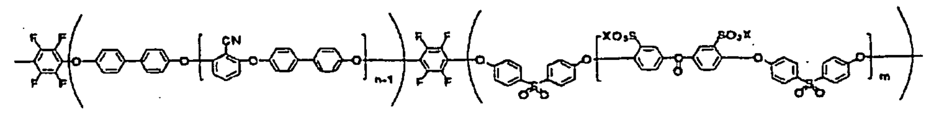

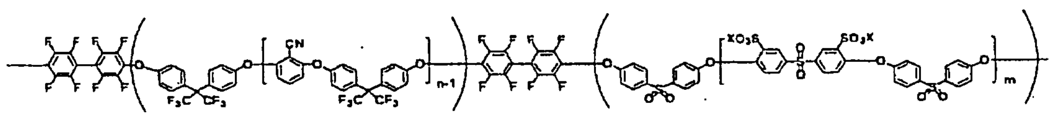

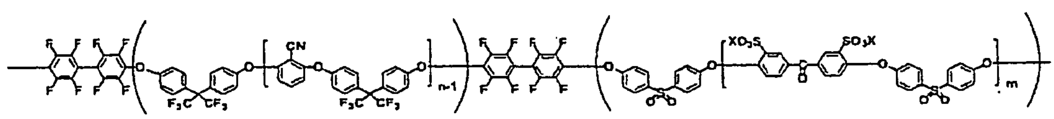

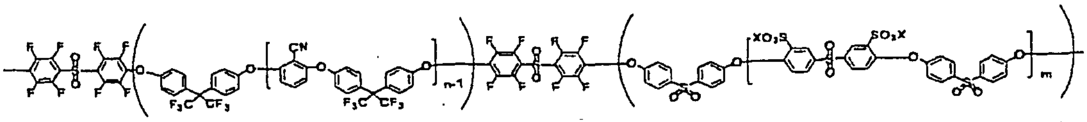

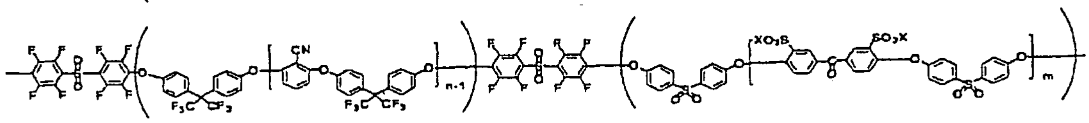

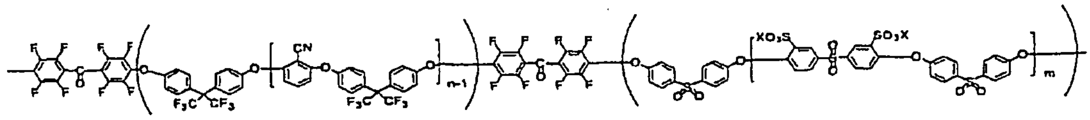

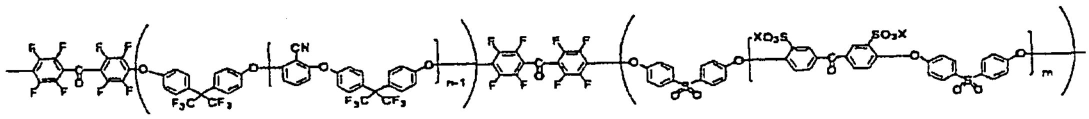

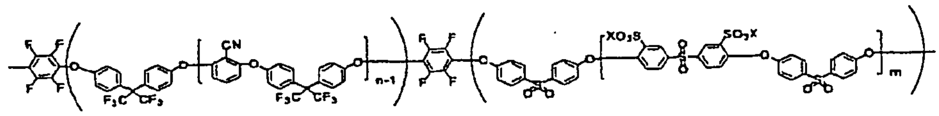

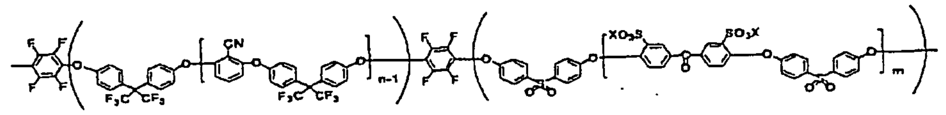

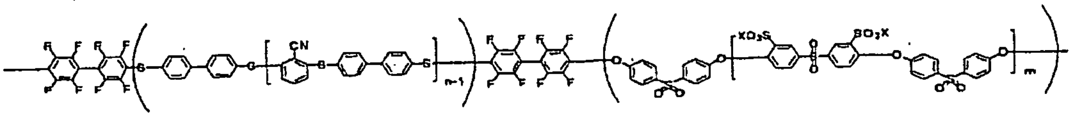

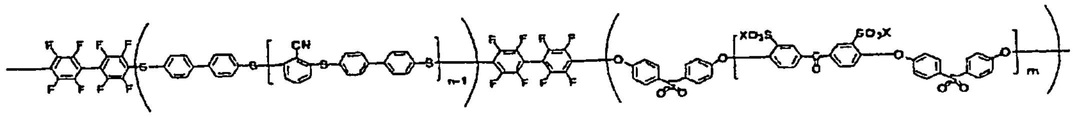

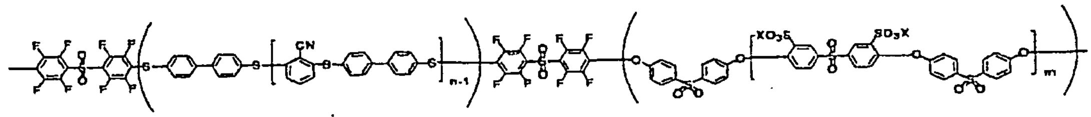

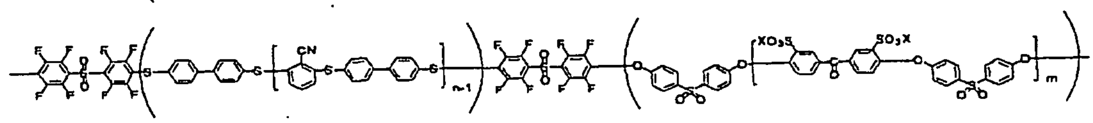

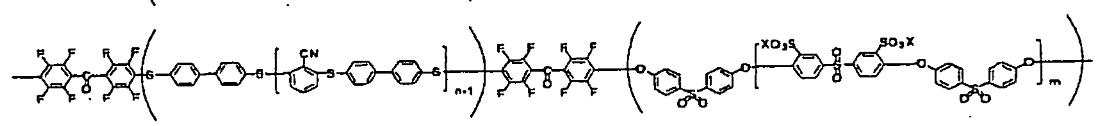

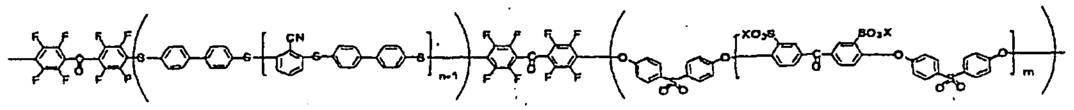

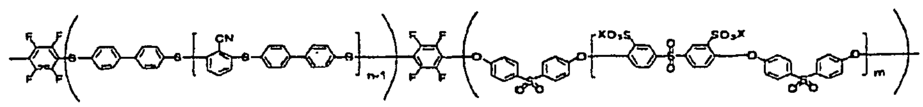

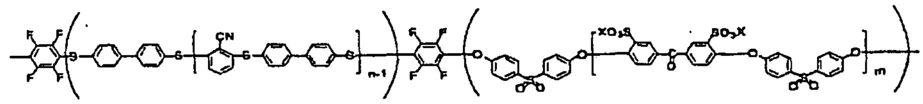

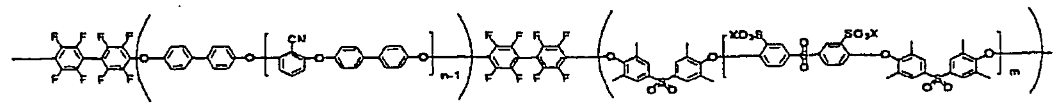

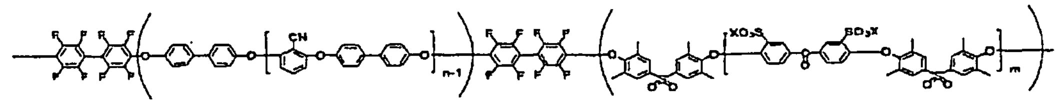

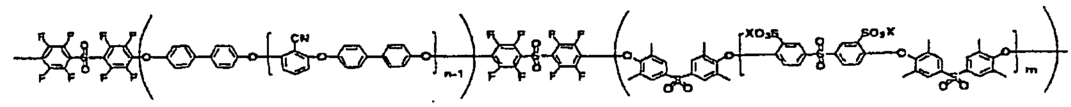

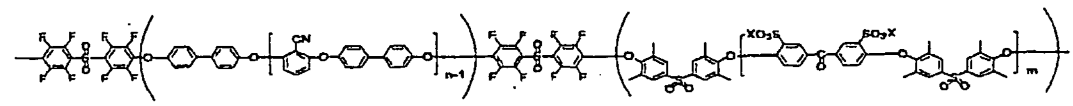

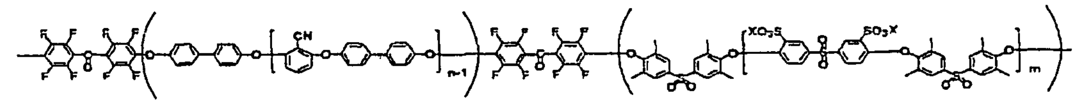

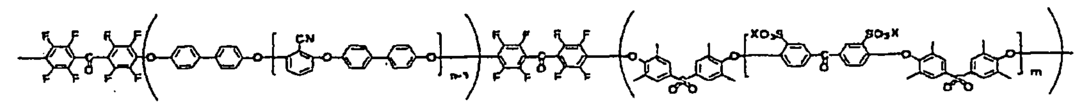

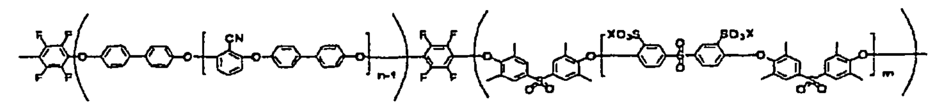

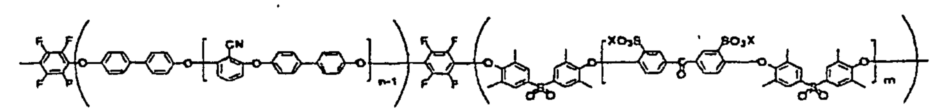

While examples of preferred structures of the segmented block copolymer according to the second aspect of the present invention are shown below, the scope of the present invention is not limited thereto. In the following formulas, X represents H or a monovalent positive ion, and n and m independently represent an integer of 2 to 100.

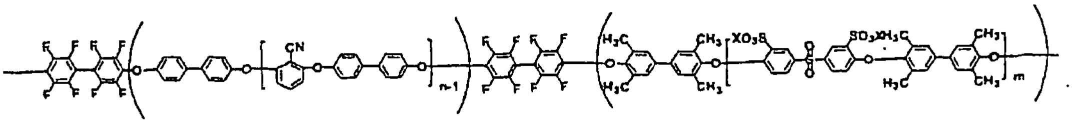

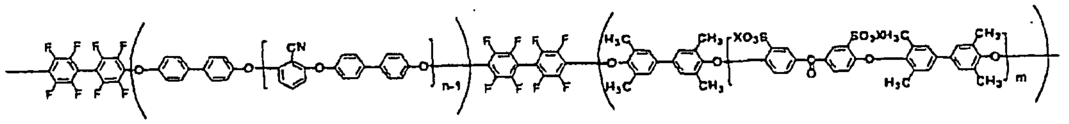

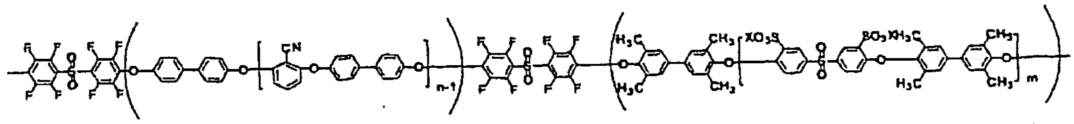

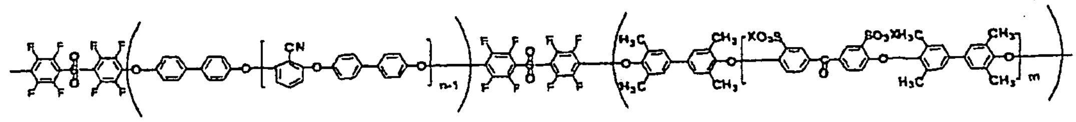

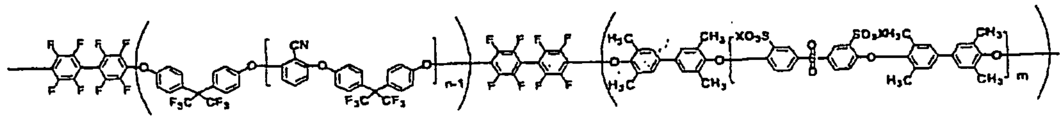

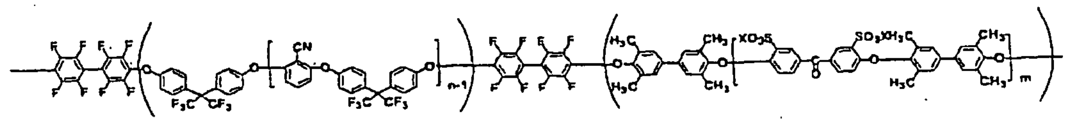

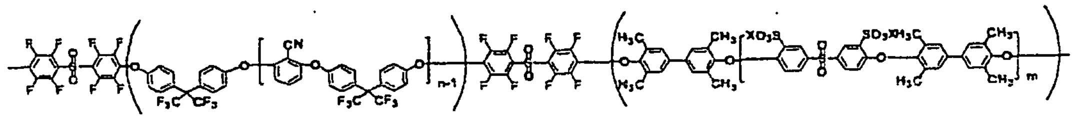

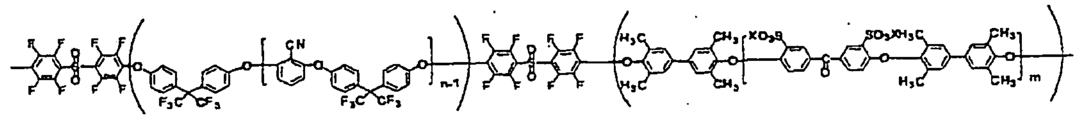

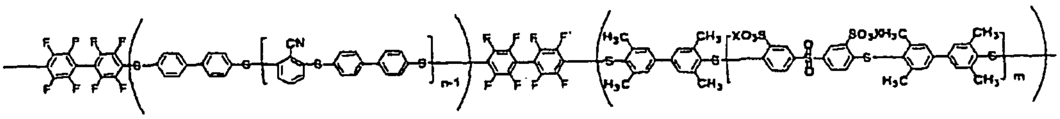

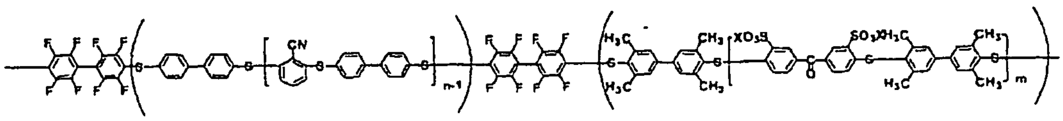

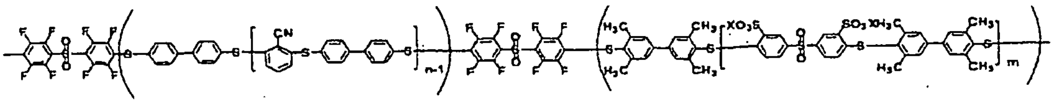

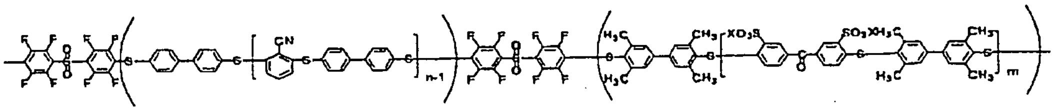

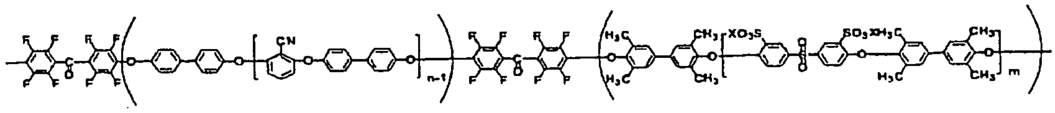

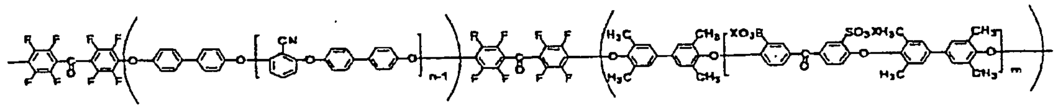

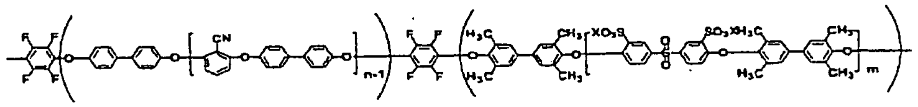

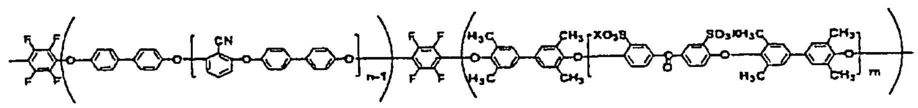

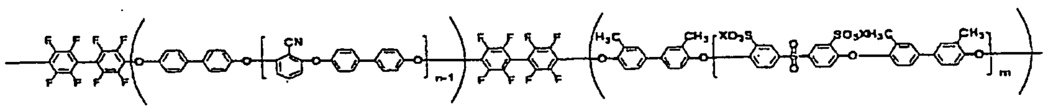

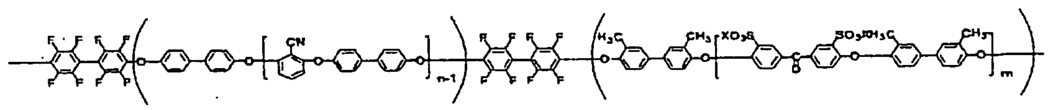

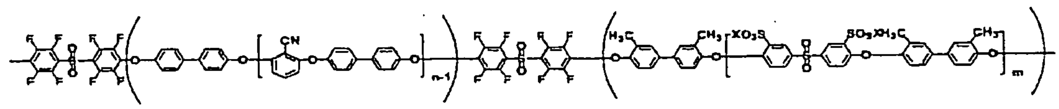

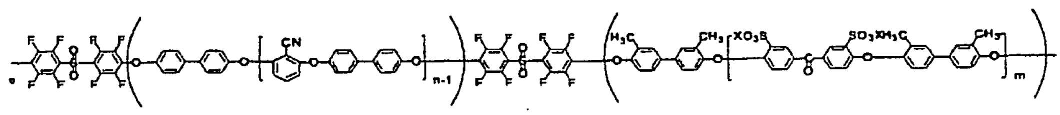

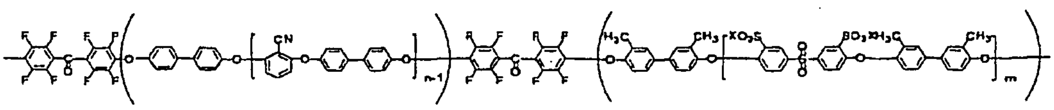

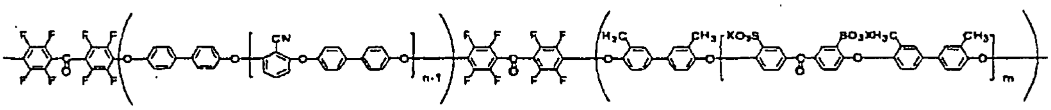

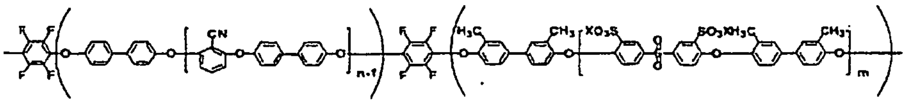

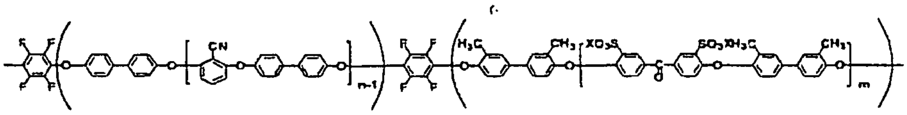

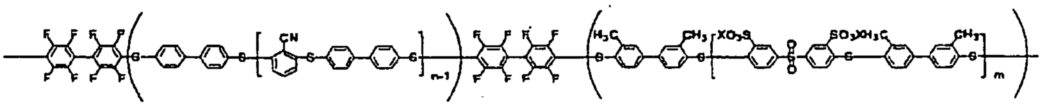

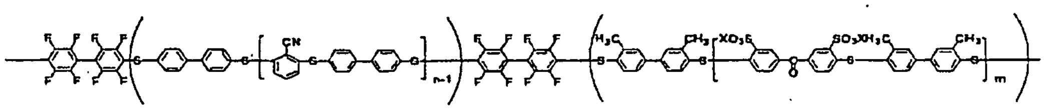

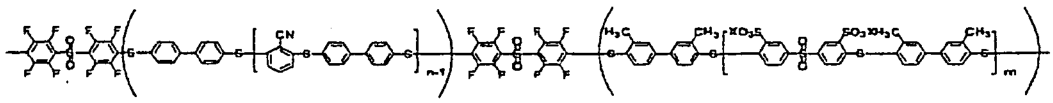

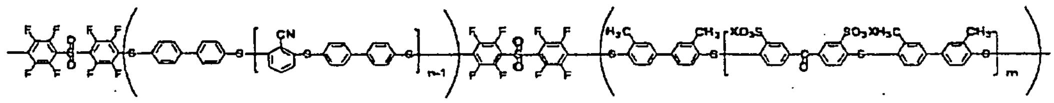

The ion exchange capacity of the segmented block copolymer of the present invention is preferably 0.5 to 2.7 meq/g. An ion exchange capacity of not more than 0.5 meq/g is not preferred because the proton conductivity is too low. An ion exchange capacity of not less than 2.7 meq/g is not preferred because swelling is large, and the durability decreases. An ion exchange capacity in the range of 0.7 to 2.0 meq/g gives more preferred characteristics in the proton conductivity, the resistance to swelling and the like. Further, an ion exchange capacity in the range of 0.7 to 1.6 meq/g gives small methanol permeability, so that it is particularly suited for a direct methanol proton exchange membrane for use in fuel cells.

The sulfonic acid group-containing block copolymer of the present invention may be used as a composition while it is mixed with other substances or compounds. Examples of the substance or compound to be mixed include fibrous substances, heteropolyacids such as phosphotungstic acid and phosphomolybdic acid, sulfonic acid and phosphonic acid having low molecular weight, acidic compounds such as phosphoric acid derivatives, silicic acid compounds, and zirconium phosphate. The content of the mixed substance is preferably less than 50% by mass. A content of not less than 50% by mass is not preferred because the physical property such as formability is impaired. As the substance to be mixed, fibrous substances are preferred for suppressing the swellability, and inorganic fibrous substances such as potassium titanate fibers are more preferred.

Further, it may be used as a composition while it is mixed with other polymers. As such polymers, for example, polyesters such as polyethylene terephthalate, polybutylene terephthalate and polyethylene naphthalate, polyamides such as nylon 6, nylon 6,6, nylon 6,10 and nylon 12, acrylate resins such as polymethyl methacrylate, polymethacrylic acid esters, polymethyl acrylate and polyacrylic acid esters, polyacrylic acid resins, polymethacrylic acid resins, various polyolefins including polyethylene, polypropylene, polystyrene and dienic polymer, polyurethane resins, cellulose resins such as cellulose acetate and ethyl cellulose, aromatic polymers such as polyarylate, aramid, polycarbonate, polyphenylene sulfide, polyphenylene oxide, polysulfone, polyethersulfone, polyetheretherketone, polyetherimide, polyimide, polyamideimide, polybenzimidazole, polybenzoxazole and polybenzthiazole, and thermosetting resins such as an epoxy resin, a phenol resin, a novolac resin and a benzoxazine resin may be used. These polymers may have a protonic acid group such as a sulfonic acid group or a phosphonic acid group.

When used as such a composition, the sulfonic acid group-containing block copolymer of the present invention

is preferably contained in an amount of not less than 50% by mass and less than 100% by mass of the entire composition. More preferably, it is not less than 70% by mass and less than 100% by mass. Particularly, in the case of mixing a polymer not containing a protonic acid group, when the content of the sulfonic acid group-containing block copolymer of the present invention is less than 50% by mass of the entire composition, the sulfonic acid group concentration of the proton exchange membrane containing this composition is low, and excellent proton conductivity tends not to be obtained, and a unit containing a sulfonic acid group becomes a non-continuous phase, and the mobility of a conducting ion tends to decrease. Also in the case of mixing a polymer having a protonic acid group, when the content of the sulfonic acid group-containing block copolymer of the present invention is less than 50% by mass of the entire composition, the area swelling rate (rate of an increase in area by swelling, to area of membrane before swelling) is large, and the durability of the membrane tends to be impaired. The composition of the present invention may contain various additives, for example, an antioxidant, a heat stabilizer, a lubricant, a tackifier, a plasticizer, a cross-linker, a viscosity modifier, an antistatic agent, an antimicrobial agent, an antifoaming agent, a dispersant and a polymerization inhibitor, as necessary.

The sulfonic acid group-containing block copolymer of the present invention may be dissolved in an appropriate solvent, and used as a composition. As the solvent, an appropriate solvent may be selected from, but are not limited to, aprotic polar solvents such as N,N-dimethylformamide, N,N-dimethylacetamide, dimethylsulfoxide, sulfolane, diphenylsulfone, N-methyl-2-pyrrolidone and hexamethylphosphoneamide. Among these, it is preferred to dissolve in N-methyl-2-pyrrolidone, N,N-dimethylacetamide and the like. These solvents may be used by mixing plural kinds as far as possible. The concentration of the compound in the solvent is preferably in the range of 0.1 to 50% by mass, and more preferably in the range of 5 to 20% by weight, and further preferably in the range of 5 to 15% by weight. When the concentration of the compound in the solution is less than 0.1 % by mass, it tends to be difficult to obtain an excellent compact, and when it is more than 50% by mass, the workability tends to be impaired. The solution may be used while it is further mixed with the aforementioned compounds and the like.

The sulfonic acid group in the polymer in such a composition of the sulfonic acid group-containing block copolymer of the present invention may be acid or a salt with a positive ion, and from the viewpoint of stability of the sulfonic acid group, it is preferably a salt with a positive ion. When it is a salt, it may be converted into acid by conducting acid treatment as necessary, for example, after forming.

The sulfonic acid group-containing block copolymer of the present invention and a composition thereof may be formed into a compact such as a fiber or a film by any method such as extrusion, spinning, rolling, casting or the like. Among these, it is preferred to form a compact from a solution obtained by dissolving in an appropriate solvent.

A method of obtaining a compact from a solution may be conducted using a conventionally known method. For example, by heating, drying under reduced pressure, dipping into a compound nonsolvent capable of being miscible with the solvent dissolving the compound and the like, it is possible to remove the solvent and to obtain a compact. When the solvent is an organic solvent, the solvent is preferably distilled off by heating or drying under reduced pressure. In this case, it may be formed into various forms such as fibrous, film-like, pellet-like, plate-like, rod-like, pipe-like, ball-like and block-like forms while it is in the form of a composite with other compounds as necessary. Combination with a compound having similar dissolution behavior is preferred because excellent forming is achieved. While the sulfonic acid group in the compact obtained in this manner may include one in the form of a salt with a positive ion, it may be converted into a free sulfonic acid group by conducting acid treatment as necessary.

An ion conductive membrane may be produced from the sulfonic acid group-containing block copolymer of the present invention and a composition thereof. The ion conductive membrane may be not only the sulfonic acid group-containing copolymer of the present invention, but also a composite membrane with a support such as a porous membrane, nonwoven fabric, fibril or paper. The obtained ion conductive membrane may be used as a proton exchange membrane for use in fuel cells.

The most preferred procedure of forming an ion conductive membrane is casting from a solution, and an ion conductive membrane can be obtained by removing the solvent as described above from the casted solution. The removal of the solvent is preferably conducted by drying from the viewpoint of uniformity of the ion conductive membrane. For preventing decomposition or deterioration of the compound or the solvent, the drying may be conducted under reduced pressure at a temperature as low as possible. When the viscosity of the solution is high, by casting at high temperature while heating a substrate or a solution, the viscosity of the solution decreases, and the casting is facilitated. The thickness of the solution in casting is not particularly limited, however, it is preferably 10 to 1000 $\mu$m. It is more preferably 50 to 500 $\mu$m. When the thickness of the solution is smaller than 10 $\mu$m, the shape as the ion conductive membrane tends not to be kept, and when the thickness is larger than 1000 $\mu$m, a nonuniform ion conductive membrane tends to be formed. As a method of controlling the casting thickness of the solution, a known method may be used. The thickness may be controlled by the amount or concentration of the solution, for example, by making the thickness uniform with the use of an applicator, a doctor blade or the like, or making the casting area uniform with the use of a glass laboratory dish. By adjusting the removing rate of the solvent, a more uniform membrane can be obtained from the casted solution. For example, in the case of heating, the evaporation rate may be decreased by employing low temperature in an initial stage. In dipping in a nonsolvent such as water, the solidification rate of the compound may be adjusted, for

example, by leaving the solution still in the air or in an inert gas for an appropriate time.

The proton exchange membrane of the present invention may have any membrane thickness depending on the purpose, however, the membrane thickness is preferably as small as possible from the viewpoint of the proton conductivity. Specifically, it is preferably 5 to 200 μm, more preferably 5 to 100 μm, and most preferably 10 to 30 μm. When the thickness of the proton exchange membrane is smaller than 5 μm, handling of the proton exchange membrane becomes difficult, and a short circuit or the like tends to occur when a fuel cell is produced therefrom, and when the thickness is larger than 200 μm, the electric resistance of the proton exchange membrane becomes high and the electric generation performance of a fuel cell tends to decrease. When it is used as a proton exchange membrane, a sulfonic acid group in the membrane may contain one in the form of a metal salt, however, it may be converted into a free sulfonic acid by an appropriate acid treatment. This may be effectively achieved by dipping the obtained membrane in an aqueous solution of sulfuric acid, hydrochloric acid and the like under or without heating. The proton conductivity of the proton exchange membrane is preferably not less than $1.0 \times 10^{-3}$ S/cm. When the proton conductivity is not less than $1.0 \times 10^{-3}$ S/cm, excellent output tends to be obtained in a fuel cell using the proton exchange membrane, and when the proton conductivity is less than $1.0 \times 10^{-3}$ S/cm, an output decrease in the fuel cell tends to occur. More preferably, the proton conductivity is in the range of $1.0 \times 10^{-2}$ to $1.0 \times 10^{-0}$ S/cm. For achieving high durability, it is preferred that the swellability is as small as possible. Too large swellability is not preferred because the membrane strength decreases and therefore the durability may decrease. However, too small swellability is not preferred because the required proton conductivity may not be obtained. In the case of using as a proton exchange membrane of a fuel cell, a preferred range of swellability, shown by a value as examples when treated with hot water at 80°C, is preferably 20 to 130%, and more preferably 30 to 110% by weight of water absorption rate (% by weight of water absorbed, relative to dry weight of polymer). An area swelling rate (rate of an increase in area by swelling, to area of membrane before swelling) is preferably in the range of 0 to 15%, and more preferably in the range of 0 to 10%. The swellability can be adjusted by the quantity of the sulfonic acid group in the polymer, the chain length of the hydrophilic segment, the chain length of the hydrophobic segment and the like. It is possible to increase the water absorbability by increasing the quantity of the sulfonic acid group, and to further increase the water absorbability by increasing the chain length of the hydrophilic segment. By decreasing the quantity of the sulfonic acid group or by increasing the chain length of the hydrophobic segment, it is possible to decrease the area swelling rate. Also by the process conditions (drying temperature, drying rate, solution concentration, solvent composition) in producing a membrane from the polymer, the swellability of the membrane can be controlled.

For forming a phase separation structure, it usually suffices that a membrane is formed in the manner as described above, however, a membrane may also be formed by adding a nonsolvent such as water into a polymer solution for the purpose of promoting phase separation.

By installing the proton exchange membrane, film or the like of the present invention in an electrode, it is possible to obtain an assembly of the proton exchange membrane, film or the like of the present invention and the electrode. As a method of producing this assembly, a conventionally known method may be used, and for example, a method of applying an adhesive on the surface of the electrode and adhering the proton exchange membrane and the electrode, or a method of heating and pressing the proton exchange membrane and the electrode is recited. As a binder of a catalyst in the electrode, and as an adhesive for adhesion between the electrode and the proton exchange membrane, a known proton conductivity polymer or a composition thereof may be used, and the sulfonic acid group-containing segmented block polymer of the present invention or a composition thereof may also be used.

Using the aforementioned assembly of the proton exchange membrane, film or the like and the electrode, a fuel cell may also be produced. Since the proton exchange membrane, film or the like of the present invention is excellent in heat resistance, processability and proton conductivity, a fuel cell that is bearable with operation at high temperature, and is easy to be produced, and has excellent output can be provided. The proton exchange membrane of the present invention is suited not only for a polymer electrolyte fuel cell (PEFC) using hydrogen as a fuel but also for a direct methanol fuel cell (DMFC) using methanol as a fuel because it has small methanol permeability. It is also suited for a fuel cell of the type that uses hydrogen drawn out from hydrocarbon such as methanol, gasoline or ethanol by a reformer because it is excellent in heat resistance and barrier property.

The sulfonic acid group-containing segmented block copolymer of the present invention may be used as a binder of a catalyst in the electrode of a fuel cell. Owing to higher durability and excellent proton conductivity as compared with a conventional binder, an excellent electrode can be obtained. For use as a binder, it may be used while it is dissolved or dispersed in an appropriate solvent. As the solvent, aprotic polar solvents such as N,N-dimethylformamide, N,N-dimethylacetamide, dimethylsulfoxide, sulfolane, diphenylsulfone, N-methyl-2-pyrrolidone, and hexamethylphosphoneamide, alcohols such as methanol and ethanol, ethers such as dimethylether and ethylene glycol monomethyl ether, ketones such as acetone, methylethylketone and cyclohexanone, and mixed solvents of these organic solvents and water and the like may be used.

EXAMPLES

In the following, the present invention will be specifically described by way of examples, however, it is to be noted that the present invention is not limited to these examples. Various measurements were conducted in the following ways.

<Solution viscosity>

A polymer powder was dissolved in N-methyl-2-pyrrolidone at a concentration of 0.5 g/dL, and viscosity was measured in a thermostat bath at 30°C by using an Ubbelohde viscometer, and evaluated by logarithmic viscosity (In [ta/tb])/c (ta represents a number of seconds required for dropping a sample solution, tb represents a number of seconds required for dropping only a solvent, and c represents a polymer concentration).

<Ion exchange capacity>

A dried proton exchange membrane in amount of 100 mg was dipped in 50 mL of a 0.01 N NaOH aqueous solution, and stirred at 25°C overnight. Then neutralization titration was conducted with a 0.05 N HCl aqueous solution. For the neutralization titration, Potentiometric titrator COMTITE-980 available from Hiranuma Sangyo Co., Ltd. was used. Ion exchange equivalent was determined by calculation according to the following formula:

$$\text{Ion exchange capacity [meq/g]} = (10\text{-titer [mL]})/2$$

<Proton conductivity>

On a self-made measurement probe (made of tetrafluoroethylene), a platinum line (diameter: 0.2 mm) was pressed against the surface of a strip-like membrane sample, and the sample was retained in a constant temperature and constant humidity oven at 80°C and 95%RH (LH-20-01 available from Nagano Science Co., Ltd.), and impedance across the platinum line was measured by 1250 FREQUENCY RESPONSE ANALYSER available from SOLARTRON. Measurement was conducted while varying the distance between electrodes, and from a gradient of plotting of measured resistance estimated from the distance between electrodes and the C-C plot, conductivity from which contact resistance between the membrane and the platinum line was cancelled was calculated according to the following formula.

$$\text{Conductivity [S/cm]} = 1/\text{membrane width [cm]} \times \text{membrane thickness [cm]} \times \text{resistance gradient between electrodes } [\Omega/\text{cm}]$$

<NMR measurement>

A polymer (sulfonic acid group is Na or K salt) was dissolved in a solvent, and measurement was conducted at room temperature for $^1$H-NMR and at 70°C for $^{13}$C-NMR using UNITY-500 available from VARIAN. As the solvent, a mixed solvent of N-methyl-2-pyrrolidone and deuterated dimethyl sulfoxide (85/15 vol./vol.) was used. For the hydrophilic oligomer and the hydrophobic oligomer, respectively constituting the hydrophobic segment and the hydrophilic segment, a $^1$H-NMR spectrum was measured, and from the integral ratio of a peak derived from a terminal group and a peak of a backbone part, a number average molecular weight was determined. For example, taking the later-described hydrophobic oligomer A of Synthesis Example 1 as an example, since a peak of the proton at the ortho position of an ether bond in a biphenyl structure was detected at 7.2 ppm for one derived from the terminal group (at the position where it bonds with perfluorobiphenyl) and detected at 7.3 ppm for one in the backbone part, a number average molecular weight was determined from the integral ratio of these peaks. When a molecular weight cannot be calculated by the NMR method, a molecular weight used in a gel permeation chromatography method, or a molecular weight calculated from the loading amount of a monomer was used depending on the occasion.

<Evaluation of swellability>

A proton exchange membrane having left still in a room of 23°C and 50%RH for a day was cut into a 50-mm

square, and the membrane was dipped in hot water at 80°C for 24 hours. After dipping, the dimension and weight of the membrane were quickly measured. The membrane was dried at 120°C for 3 hours, and dry weight was measured. According to the following formulas, water absorption rate and area swelling rate were calculated. As to the dimension of the membrane, lengths of orthogonal two sides that bonds to a specific apex were measured.

$$\text{Water absorption rate (\%)} = \{\text{weight after dipping (g)} - \text{dry weight (g)}\} \div \text{dry weight (g)} \times 100$$

$$\text{Area swelling rate (\%)} = \{\text{length of side after dipping A (mm)} \times \text{length of side after dipping B (mm)}\} \times \{50 \times 50\} \times 100 - 100$$

<Production method of proton exchange membrane>

A polymer (one whose sulfonic acid group is in a salt form) in an amount of 20.0 g was dissolved in 180 mL of N-methyl-2-pyrrolidone (abbreviated as NMP), and filtered under pressure, and continuously casted on a film of polyethylene terephthalate of 190 μm thick so that the thickness was 140 μm, and heated at 130°C for 30 minutes, and dried, and the obtained membrane was wound up together with the film of polyethylene terephthalate. The obtained membrane was continuously dipped in pure water while it was attached to the film of polyethylene terephthalate, and then continuously dipped in 1 mol/L of an sulfuric acid aqueous solution for 30 minutes to convert the sulfonic acid group into an acid form, and then washed with pure water to remove free sulfuric acid, and then dried and peeled out of the film of polyethylene terephthalate, to obtain a proton exchange membrane.
Synthesis of hydrophilic and hydrophobic oligomers will be described below.

<Synthesis Example 1: hydrophobic oligomer solution A>

First, 70.29 g (409 mmol) of 2,6-dichlorobenzonitrile (abbreviated as DCBN), 79.91 g (428 mmol) of 4,4'-biphenol (abbreviated as BP), 68.04 g (492 mmol) of potassium carbonate, 1350 mL of NMP, and 150 mL of toluene were charged into a 2000-mL branched flask attached with a nitrogen introducing tube, a stirring blade, a Dean-Stark trap and a thermometer, and heated while stirring in an oil bath under a nitrogen gas flow. After conducting dehydration by azeotropy with toluene at 140°C, all of the toluene was distilled off. Thereafter, the temperature was raised to 160°C, and heated for 5 hours. Thereafter, the reaction was allowed to cool to room temperature to obtain a hydrophobic oligomer solution A. For the obtained solution, $^1$H-NMR measurement was conducted, and the number average molecular weight was determined as 6150. The chemical structure of hydrophobic oligomer A is shown below.

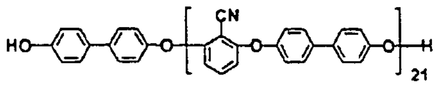

<Synthesis Example 2: hydrophobic oligomer B>

A polymerization solution of a hydrophobic oligomer B was obtained in the same manner as in Synthesis Example 1 except that the amount of DCBN was 71.05 g (413 mmol), the amount of BP was 78.95 g (424 mmol) and the amount of potassium carbonate was 67.38 g (488 mmol). After introducing the solution little by little into 5L of pure water to make it solidify, washing was conducted by dipping in pure water five times and in acetone three times. Then the solid content was separated by filtration, and dried under reduced pressure at 120°C for 12 hours, to obtain a hydrophobic oligomer B. The number average molecular weight measured by $^1$H-NMR was 11100. The chemical structure of hydrophobic oligomer B is shown below.

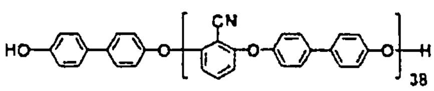

<Synthesis Example 3: hydrophobic oligomer solution C>

A hydrophobic oligomer solution C was obtained in the same manner as in Synthesis Example 1 except that 101.69 g (302 mmol) of 2,2-(4-hydroxyphenyl)hexafluoropropane was used in place of BP, the amount of DCBN was 48.31 g (281 mmol) and the amount of $K_2CO_3$ was 48.07 g (348 mmol). The number average molecular weight measured by $^1$H-NMR was 5980. The chemical structure of hydrophobic oligomer C is shown below.

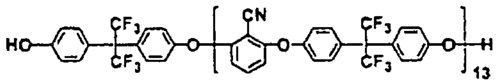

<Synthesis Example 4: hydrophobic oligomer solution D>

A hydrophobic oligomer solution D was obtained in the same manner as in Synthesis Example 1 except that 99.93 g (312 mmol) of 1,3-bis(4-hydroxyphenyl)adamantane was used in place of BP, the amount of DCBN was 50.07 g (291 mmol) and the amount of $K_2CO_3$ was 49.57 g (359 mmol). The number average molecular weight measured by $^1$H-NMR was 6170. The chemical structure of hydrophobic oligomer D is shown below.

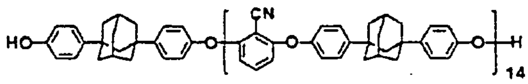

<Synthesis Example 5: hydrophobic oligomer E>

An oligomer polymerization solution was obtained in the same manner as in Synthesis Example 1. Another 2000-mL branched flask attached with a nitrogen introducing tube, a stirring blade, a reflux condenser tube and a thermometer was charged with 200 mL of NMP and 39.00 g (117 mmol) of decafluorobiphenyl, and heated to 110°C while stirring in an oil bath under a nitrogen gas flow. Then a reaction solution of DCBN and BP was introduced over 2 hours using a dropping funnel while stirring, and stirred another 3 hours after completion of the introduction. After cooled to the room temperature, the reaction solution was poured into 3000 mL of acetone to make the oligomer solidify. After removing the supernatant containing fine precipitates and washing with acetone twice, washing with pure water was conducted three times, to remove NMP and inorganic salts. Then the oligomer was separated by filtration and dried at 120°C for 16 hours under reduced pressure, to obtain a hydrophobic oligomer E. The number average molecular weight measured by $^1$H-NMR was 6820. The chemical structure of hydrophobic oligomer E is shown below.

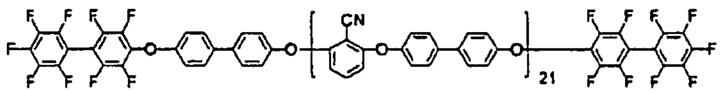

<Synthesis Example 6: hydrophobic oligomer F>

An oligomer polymerization solution was obtained in the same manner as in Synthesis Example 1. A hydrophobic oligomer F was obtained in the same manner as in Synthesis Example 5 except that 46.50 g (117 mmol) of perfluorodiphenylsulfone was used in place of decafluorobiphenyl. The number average molecular weight measured by $^1$H-NMR was 6990. The chemical structure of hydrophobic oligomer F is shown below.

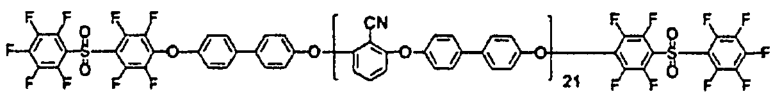

<Synthesis Example 7: hydrophobic oligomer G>

An oligomer polymerization solution was obtained in the same manner as in Synthesis Example 1. A hydrophobic oligomer G was obtained in the same manner as in Synthesis Example 5 except that 42.27 g (117 mmol) of perfluorobenzophenone was used in place of decafluorobiphenyl. The number average molecular weight measured by $^1$H-NMR was 6810. The chemical structure of hydrophobic oligomer G is shown below.

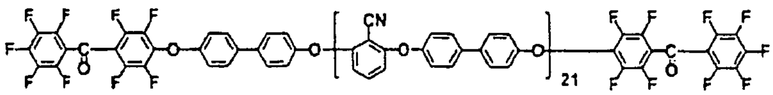

<Synthesis Example 8: hydrophobic oligomer H>

An oligomer polymerization solution was obtained in the same manner as in Synthesis Example 1. A hydrophobic oligomer H was obtained in the same manner as in Synthesis Example 5 except that 21.72 g (117 mmol) of perfluorobenzene was used in place of decafluorobiphenyl. The number average molecular weight measured by $^1$H-NMR was 6530. The chemical structure of hydrophobic oligomer H is shown below.

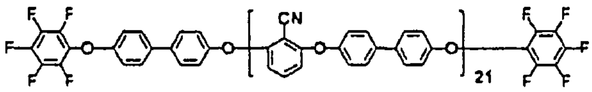

<Synthesis Example 9: hydrophobic oligomer solution I>

A hydrophobic oligomer solution I was obtained in the same manner as in Synthesis Example 1 except that the amount of DCBN was 64.11 g (373 mmol), 85.89 g (393 mmol) of 4, 4'-dimercaptobiphenyl was used in place of BP, and the amount of potassium carbonate was 62.53 g (452 mmol). The number average molecular weight measured by $^1$H-NMR was 5960. The chemical structure of hydrophobic oligomer I is shown below.

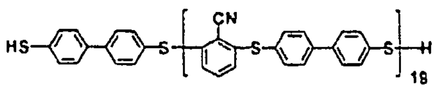

<Synthesis Example 10: hydrophilic oligomer solution a>

First, 280.8 g (611 mmol) of 4,4'-difluorodiphenylsulfone-3,3'-disulfonic acid soda (abbreviated as S-DFDPS), 169.9 g (701 mmol) of 4,4'-dihydroxydiphenylsulfone (abbreviated as BS), 107.9 g (781 mmol) of potassium carbonate, 1050 mL of NMP and 150 mL of toluene were charged into a 2000-mL branched flask attached with a nitrogen introducing tube, a stirring blade, a Dean-Stark trap and a thermometer, and heated while stirring in an oil bath under a nitrogen gas flow. After conducting dehydration by azeotropy with toluene at 140°C, all of the toluene was distilled off. Then the temperature was raised to 160°C, and heated for 8 hours. Subsequently, the reaction was allowed to cool while stirring to room temperature to obtain a hydrophilic oligomer solution a. The number average molecular weight measured by $^1$H-NMR was 6240. The chemical structure of hydrophilic oligomer a is shown below.

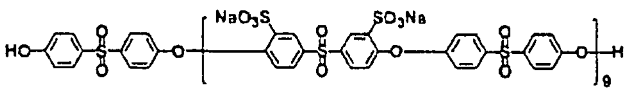

<Synthesis Example 11: hydrophilic oligomer b>

A solution obtained in the same manner as in Synthesis Example 10 except that the amount of S-DFDPS was 284.8 g (621 mmol), the amount of BS was 165.2 g (682 mmol), and the amount of $K_2CO_3$ was 104.93 g (759 mmol) was subjected to suction filtration through a 25G2 glass filter, to obtain a yellow transparent solution. The obtained solution was added dropwise into 5 L of acetone to make the oligomer solidify. The oligomer was washed three more times with acetone, separated by filtration, and dried under reduced pressure, to obtain a hydrophilic oligomer b. The number average molecular weight measured by $^1$H-NMR was 10920. The chemical structure of hydrophilic oligomer b is shown below.

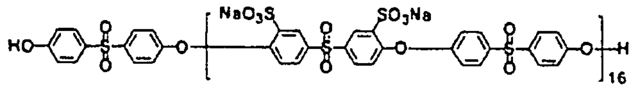

<Synthesis Example 12: hydrophilic oligomer c>

A hydrophilic oligomer c was obtained in the same manner as in Synthesis Example 11 except that 271.3 g (643 mmol) of 4,4'-difluorobenzophenone-3,3'-disulfonic acid soda was used in place of S-DFDPS, the amount of BS was 178.7 g (737 mmol) and the amount of potassium carbonate was 113.47 (821 mmol). The number average molecular weight measured by $^1$H-NMR was 5950. The chemical structure of hydrophilic oligomer c is shown below.

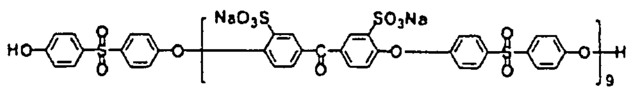

<Synthesis Example 13: hydrophilic oligomer d>

A hydrophilic oligomer d was obtained in the same manner as in Synthesis Example 11 except that 247.8 g (587 mmol) of 4,4'-difluorobenzophenone-3,3'-disulfonic acid soda was used in place of S-DFDPS, 202.2 g (660 mmol) of 3,3',5,5'-tetramethyl-4,4'-dihydroxydiphenylsulfone was used in place of BS, and the amount of potassium carbonate was 104.9 (758 mmol). The number average molecular weight measured by $^1$H-NMR was 5850. The chemical structure of hydrophilic oligomer d is shown below.

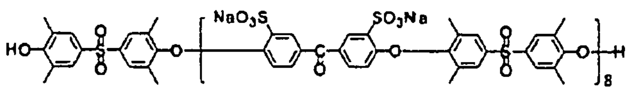

<Synthesis Example 14: hydrophilic oligomer e>

A hydrophilic oligomer e was obtained in the same manner as in Synthesis Example 11 except that the amount of S-DFDPS was 256.9 g (560 mmol), 193.2 g (630 mmol) of 3,3',5,5'-tetramethyl-4,4'-dihydroxydiphenylsulfone was used in place of BS, and the amount of potassium carbonate was 100.2 (725 mmol). The number average molecular weight measured by $^1$H-NMR was 6070. The chemical structure of hydrophilic oligomer e is shown below.

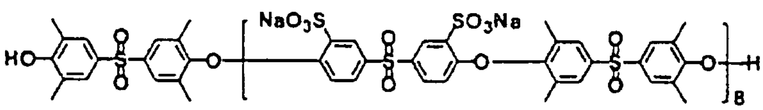

<Comparative Synthesis Example 1: hydrophilic oligomer f>

A hydrophilic oligomer solution f was obtained in the same manner as in Synthesis Example 10 except that the amount of S-DFDPS was 311.0 g (679 mmol), 139.0 g (746 mmol) of BP was used in place of BS, and the amount of

potassium carbonate was 118.6 g (858 mmol). The number average molecular weight measured by $^1$H-NMR was 6240. The chemical structure of hydrophilic oligomer f is shown below.

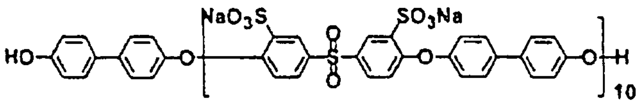

<Comparative Synthesis Example 2: hydrophilic oligomer g>

A hydrophilic oligomer g was obtained in the same manner as in Synthesis Example 11 except that the amount of S-DFDPS was 315.9 g (687 mmol), 135.1 g (725 mmol) of BP was used in place of BS, and the amount of potassium carbonate was 115.3 g (834 mmol). The number average molecular weight measured by $^1$H-NMR was 11020. The chemical structure of hydrophilic oligomer g is shown below.

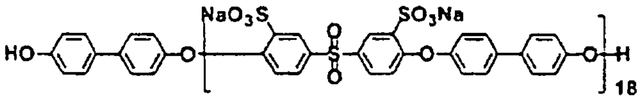

In the synthesis examples and comparative synthesis examples of the hydrophilic oligomers as described above, part of sulfonic acid groups in the polymer seems to be a potassium salt, however, calculation of molecular weight or the like was conducted while assuming that every sulfonic acid group is a sodium salt.

<Synthesis Example 15: hydrophobic oligomer solution L>

First, 70.50 g (410 mmol) of 2,6-dichlorobenzonitrile (abbreviated as DCBN), 79.50 g (427 mmol) of 4,4'-biphenol (abbreviated as BP), 67.86 g (491 mmol) of potassium carbonate, 1350 mL of NMP, and 150 mL of toluene were charged into a 2000-mL branched flask attached with a nitrogen introducing tube, a stirring blade, a Dean-Stark trap and a thermometer, and heated while stirring in an oil bath under a nitrogen gas flow. After conducting dehydration by azeotropy with toluene at 140°C, all of the toluene was distilled off. Thereafter, the temperature was raised to 160°C, and heated for 5 hours. Then the reaction was allowed to cool to room temperature to obtain a hydrophobic oligomer solution L. For the obtained solution, $^1$H-NMR measurement was conducted, and the number average molecular weight was determined as 7050. The chemical structure of hydrophobic oligomer L is shown below.

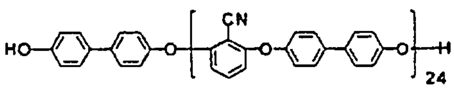

<Synthesis Example 16: hydrophobic oligomer M>

A polymerization solution of a hydrophobic oligomer M was obtained in the same manner as in Synthesis Example 15 except that the amount of DCBN was 71.15 g (414 mmol), the amount of BP was 78.85 g (423 mmol) and the amount of potassium carbonate was 67.31 g (487 mmol). After introducing the solution little by little into 5 L of pure water to make it solidify, washing was conducted by dipping in pure water five times and in acetone three times. Then the solid content was separated by filtration, and dried under reduced pressure at 120°C for 12 hours, to obtain a hydrophobic oligomer M. The number average molecular weight measured by $^1$H-NMR was 12150. The chemical structure of hydrophobic oligomer M is shown below.

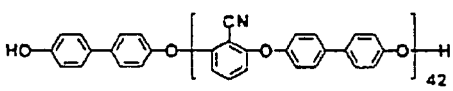

<Synthesis Example 17: hydrophobic oligomer solution N>

A hydrophobic oligomer solution N was obtained in the same manner as in Synthesis Example 15 except that 101.38 g (302 mmol) of 2,2-(4-hydroxyphenyl)hexafluoropropane was used in place of BP, the amount of DCBN was 48.62 g (283 mmol), and the amount of $K_2CO_3$ was 47.92 g (347 mmol). The number average molecular weight measured by $^1$H-NMR was 6890. The chemical structure of hydrophobic oligomer N is shown below.

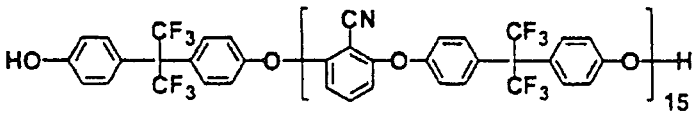

<Synthesis Example 18: hydrophobic oligomer solution O>

A hydrophobic oligomer solution O was obtained in the same manner as in Synthesis Example 15 except that 99.65 g (311 mmol) of 1,3-bis(4-hydroxyphenyl) adamantane was used in place of BP, the amount of DCBN was 50.35 g (293 mmol), and the amount of $K_2CO_3$ was 49.43 g (358 mmol). The number average molecular weight measured by $^1$H-NMR was 7030. The chemical structure of hydrophobic oligomer O is shown below.

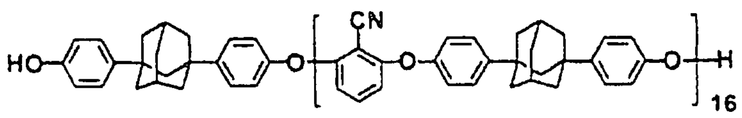

<Synthesis Example 19: hydrophobic oligomer P>

An oligomer polymerization solution was obtained in the same manner as in Synthesis Example 15. Another 2000-mL branched flask attached with a nitrogen introducing tube, a stirring blade, a reflux condenser tube and a thermometer was charged with 200 mL of NMP and 34.23 g (103 mmol) of decafluorobiphenyl, and heated to 110°C while stirring in an oil bath under a nitrogen gas flow. Then a reaction solution of DCBN and BP was introduced over 2 hours using a dropping funnel while stirring, and stirred another 3 hours after completion of the introduction. After cooled to room temperature, the reaction solution was poured into 3000 mL of acetone to make the oligomer solidify. After removing the supernatant containing fine precipitates and washing with acetone twice, washing with pure water was conducted three times, to remove NMP and inorganic salts. Then the oligomer was separated by filtration and dried at 120°C for 16 hours under reduced pressure, to obtain a hydrophobic oligomer P. The number average molecular weight measured by $^1$H-NMR was 7690. The chemical structure of hydrophobic oligomer P is shown below.

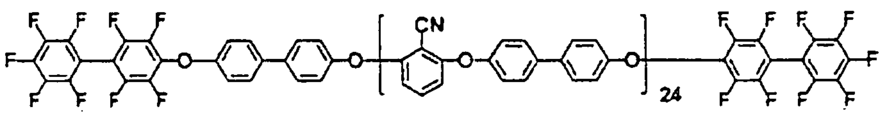

<Synthesis Example 20: hydrophobic oligomer Q>

An oligomer polymerization solution was obtained in the same manner as in Synthesis Example 1 except that the amount of BP was 79.56 g (427 mmol), the amount of DCBN was 70.44 g (409 mmol), and the amount of $K_2CO_3$ was 67.91 g (491 mmol). A hydrophobic oligomer Q was obtained in the same manner as in Synthesis Example 19 except that 42.54 g (107 mmol) of perfluorodiphenylsulfone was used in place of decafluorobiphenyl. The number average molecular weight measured by $^1$H-NMR was 7440. The chemical structure of hydrophobic oligomer Q is shown below.

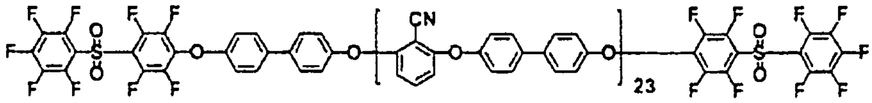

<Synthesis Example 21: hydrophobic oligomer R>

An oligomer polymerization solution was obtained in the same manner as in Synthesis Example 19 except that the amount of BP was 79.56 g (427 mmol), the amount of DCBN was 70.44 g (409 mmol), and the amount of $K_2CO_3$ was 67.91 g (491 mmol). A hydrophobic oligomer R was obtained in the same manner as in Synthesis Example 19 except that 38.67 g (107 mmol) of perfluorobenzophenone was used in place of decafluorobiphenyl. The number average molecular weight measured by $^1$H-NMR was 7420. The chemical structure of hydrophobic oligomer R is shown below.

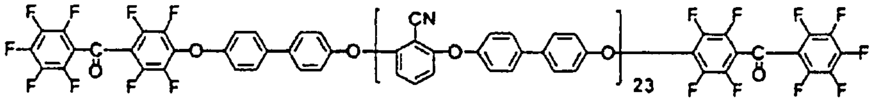

<Synthesis Example 22: hydrophobic oligomer S>

An oligomer polymerization solution was obtained in the same manner as in Synthesis Example 15. A hydrophobic oligomer H was obtained in the same manner as in Synthesis Example 19 except that 19.05 g (103 mmol) of perfluorobenzene was used in place of decafluorobiphenyl. The number average molecular weight measured by $^1$H-NMR was 7320. The chemical structure of hydrophobic oligomer S is shown below.

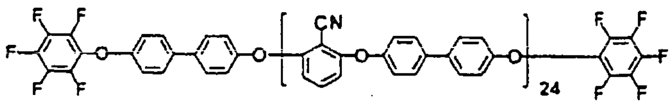

<Synthesis Example 23: hydrophobic oligomer solution T>

A hydrophobic oligomer solution T was obtained in the same manner as in Synthesis Example 15 except that the amount of DCBN was 64.38 g (374 mmol), 85.62 g (392 mmol) of 4,4'-dimercaptobiphenyl was used in place of BP, and the amount of potassium carbonate was 62.32 g (491 mmol). The number average molecular weight measured by $^1$H-NMR was 6900. The chemical structure of hydrophobic oligomer T is shown below.

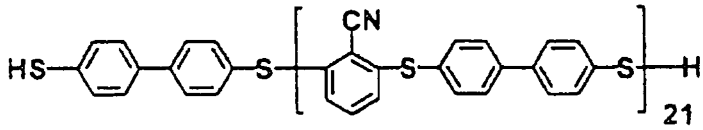

<Synthesis Example 24: hydrophilic oligomer solution i>

First, 305.1 g (621 mmol) of 4,4'-dichlorodiphenylsulfone-3,3'-disulfonic acid soda (abbreviated as S-DCDPS), 165.5 g (683 mmol) of 3,3',5,5'-tetramethylbiphenyl-4,4'-diol (abbreviated as TMBP), 108.5 g (785 mmol) of potassium carbonate, 1150 mL of NMP, and 150 mL of toluene were charged into a 2000-mL branched flask attached with a nitrogen introducing tube, a stirring blade, a Dean-Stark trap and a thermometer, and heated while stirring in an oil bath under a nitrogen gas flow. After conducting dehydration by azeotropy with toluene at 140°C, all of the toluene was distilled off. Thereafter, the temperature was raised to 210°C, and heated for 15 hours. Then the reaction was allowed to cool while stirring to room temperature to obtain a hydrophilic oligomer solution i. The number average molecular weight measured by $^1$H-NMR was 6890. The chemical structure of hydrophilic oligomer i is shown below.

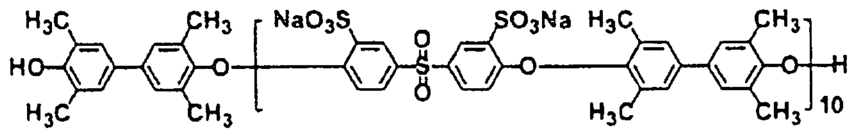

<Synthesis Example 25: hydrophilic oligomer j>

A solution obtained in the same manner as in Synthesis Example 24 except that the amount of S-DCDPS was 309.48 g (630 mmol), the amount of TMBP was 161.17 g (665 mmol), and the amount of $K_2CO_3$ was 105.72 g (765 mmol) was subjected to suction filtration through a 25G2 glass filter, to obtain a transparent solution. The obtained solution was added dropwise into 5 L of acetone to make the oligomer solidify. The oligomer was washed three more times with acetone, and separated by filtration, and dried under reduced pressure, to obtain a hydrophilic oligomer j. The number average molecular weight measured by $^1$H-NMR was 12100. The chemical structure of hydrophilic oligomer j is shown below.

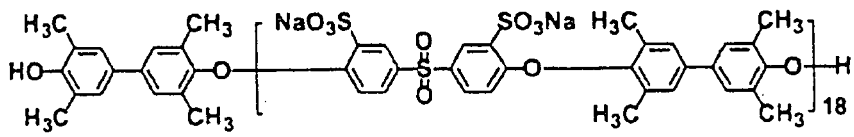

<Synthesis Example 26: hydrophilic oligomer k>

A hydrophilic oligomer k was obtained in the same manner as in Synthesis Example 25 except that 280.6 g (664 mmol) of 4,4'-difluorobenzophenone-3,3'-disulfonic acid soda was used in place of S-DCDPS, the amount of TMBP was 169.5 g (699 mmol), and the amount of potassium carbonate was 111.15(804 mmol). The number average molecular weight measured by $^1$H-NMR was 12140. The chemical structure of hydrophilic oligomer k is shown below.

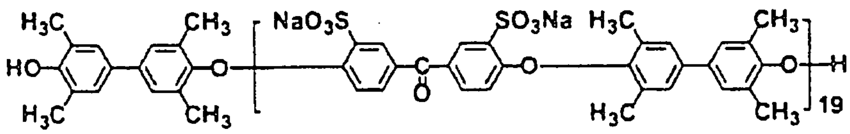

<Synthesis Example 27: hydrophilic oligomer 1>

A hydrophilic oligomer 1 was obtained in the same manner as in Synthesis Example 25 except that the amount of S-DCDPS was 323.24 g (658 mmol), 148.4 g (693 mmol) of 3,3'-dimethyl-4,4'-dihydroxybiphenyl was used in place of TMBP, the amount of potassium carbonate was 110.09 (797 mmol). The number average molecular weight measured by $^1$H-NMR was 12200. The chemical structure of hydrophilic oligomer 1 is shown below.

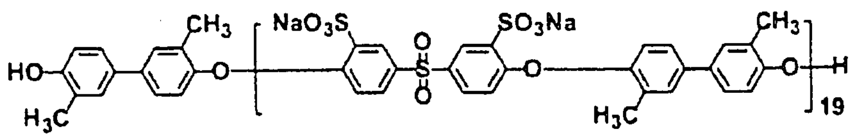

<Synthesis Example 28: hydrophilic oligomer m>

A hydrophilic oligomer m was obtained in the same manner as in Synthesis Example 25 except that the amount of S-DCDPS was 295.24 g (601 mmol), 174.6 g (636 mmol) of 3,3',5,5'-tetramethyl-4,4'-dimercaptobiphenyl was used in place of TMBP, and the amount of potassium carbonate was 101.12 (732 mmol). The number average molecular

weight measured by $^1$H-NMR was 12000. The chemical structure of hydrophilic oligomer m is shown below.

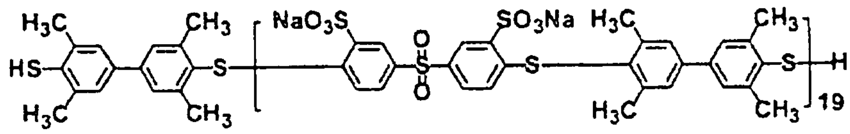

<Comparative Synthesis Example 3: hydrophilic oligomer n>

A hydrophilic oligomer solution n was obtained in the same manner as in Synthesis Example 24 except that the amount of S-DCDPS was 334.05 g (680 mmol), 138.2 g (742 mmol) of BP was used in place of TMBP, and the amount of potassium carbonate was 117.95 g (853 mmol). The number average molecular weight measured by $^1$H-NMR was 6820. The chemical structure of hydrophilic oligomer n is shown below.

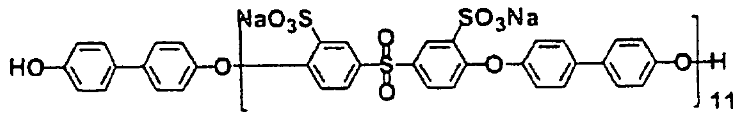

<Comparative Synthesis Example 4: hydrophilic oligomer o>

A hydrophilic oligomer o was obtained in the same manner as in Synthesis Example 25 except that the amount of S-DCDPS was 337.98 g (688 mmol), 134.6 g (723 mmol) of BP was used in place of TMBP, and the amount of potassium carbonate was 114.85 g (831 mmol). The number average molecular weight measured by $^1$H-NMR was 12300. The chemical structure of hydrophilic oligomer o is shown below.

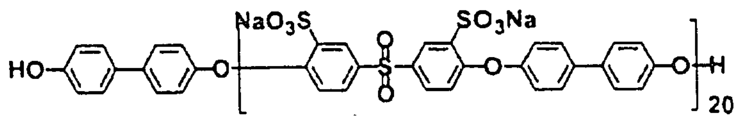

In the synthesis examples and comparative synthesis examples of the hydrophilic oligomers as described above, part of sulfonic acid groups in the polymer seems to be a potassium salt, however, calculation of molecular weight or the like was conducted while assuming that every sulfonic acid group is a sodium salt.

<Example 1>

First, 75.67 g of hydrophilic oligomer solution a and 124.34 g of hydrophobic oligomer solution A were charged into a 500-mL branched flask attached with a nitrogen introducing tube, a stirring blade, a Dean-Stark trap and a thermometer, and mixed, and stirred at room temperature under a nitrogen gas flow for 1 hour. Then 0.64 g of potassium carbonate, 1.35 g of decafluorobiphenyl, and 110 mL of NMP were added, and stirred at room temperature for another 1 hour, and then heated to 110°C to allow reaction to proceed for 8 hours. Then the reaction was cooled to room temperature, and added dropwise into 2 L of pure water to make the polymer solidify. After washing with pure water three times, the reaction was treated at 80°C for 16 hours while it was dipped in pure water, and then the pure water was removed and washed with hot water. Thereafter, hot water washing was repeated one more time. The polymer from which water was removed was dipped in a mixed solvent of 600 mL of isopropanol and 300 mL of water at room temperature for 16 hours, and the polymer was removed and washed. The same operation was conducted one more time. Then the polymer was separated by filtration, and dried at 120°C for 12 hours under reduced pressure. The logarithmic viscosity of the polymer thus obtained was 2.4 dL/g. From the obtained polymer, a proton exchange membrane A was obtained according to the aforementioned production method of proton exchange membrane. The chemical structure of the polymer constituting proton exchange membrane A is shown below.

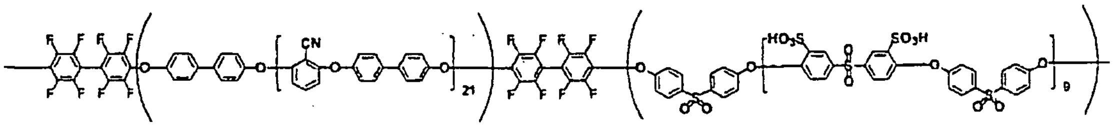

<Example 2>

First, 20.00 g of hydrophilic oligomer b and 10.00 g of hydrophobic oligomer B were charged into a 500-mL branched flask attached with a nitrogen introducing tube, a stirring blade, a Dean-Stark trap and a thermometer, and added with 280 mL of NMP, and stirred at 50°C under a nitrogen gas flow for 7 hours. Then 0.55 g of sodium carbonate, 1.15 g of decafluorobiphenyl were added, and stirred at room temperature for 1 hour, and the same operation as in Example 1 was conducted. The logarithmic viscosity of the obtained polymer was 2.5 dL/g. From the obtained polymer, a proton exchange membrane B was obtained according to the aforementioned production method of proton exchange membrane. The chemical structure of the polymer constituting proton exchange membrane B is shown below.

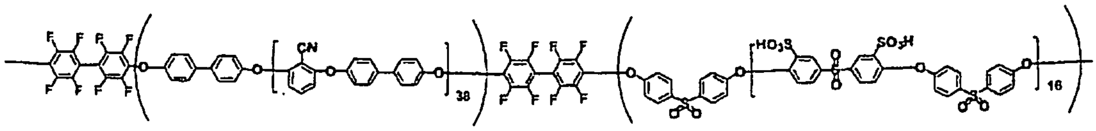

<Example 3>

The logarithmic viscosity of a polymer obtained in the same manner as in Example 1 using 75.67 g of hydrophilic oligomer solution a, 113.90 g of hydrophobic oligomer solution C, 0.76 g of potassium carbonate, 1.60 g of decafluorobiphenyl and 120 mL of NMP was 2.8 dL/g. From the obtained polymer, a proton exchange membrane C was obtained according to the aforementioned production method of proton exchange membrane. The chemical structure of the polymer constituting proton exchange membrane C is shown below.

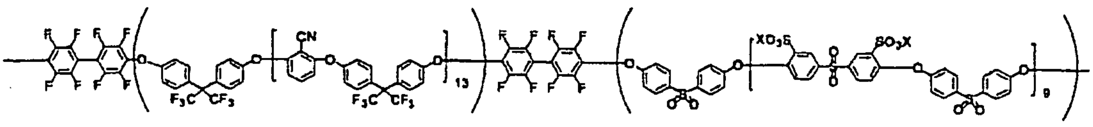

<Example 4>

The logarithmic viscosity of a polymer obtained in the same manner as in Example 1 using 75.67 g of hydrophilic oligomer solution a, 109.46 g of hydrophobic oligomer solution D, 0.74 g of potassium carbonate, 1.56 g of decafluorobiphenyl and 120 mL of NMP was 2.7 dL/g. From the obtained polymer, a proton exchange membrane D was obtained according to the aforementioned production method of proton exchange membrane. The chemical structure of the polymer constituting proton exchange membrane D is shown below.

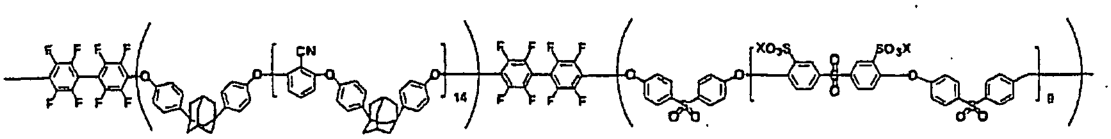

<Example 5>

The logarithmic viscosity of a polymer obtained in the same manner as in Example 2 using 20.00 g of hydrophilic oligomer b, 12.43 g of hydrophobic oligomer E, 0.29 g of potassium carbonate and 290 mL of NMP was 2.3 dL/g. From

the obtained polymer, a proton exchange membrane E was obtained according to the aforementioned production method of proton exchange membrane. The chemical structure of the polymer constituting proton exchange membrane E is shown below.

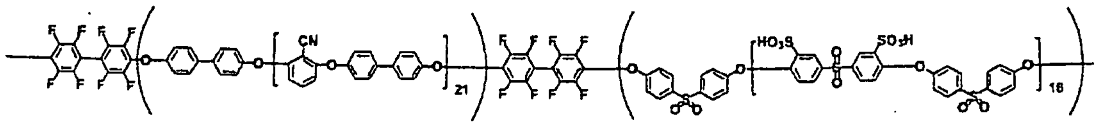

<Example 6>

The logarithmic viscosity of a polymer obtained in the same manner as in Example 2 using 20.00 g of hydrophilic oligomer b, 12.67 g of hydrophobic oligomer F, 0.29 g of potassium carbonate and 290 mL of NMP was 2.5 dL/g. From the obtained polymer, a proton exchange membrane F was obtained according to the aforementioned production method of proton exchange membrane. The chemical structure of the polymer constituting proton exchange membrane F is shown below.

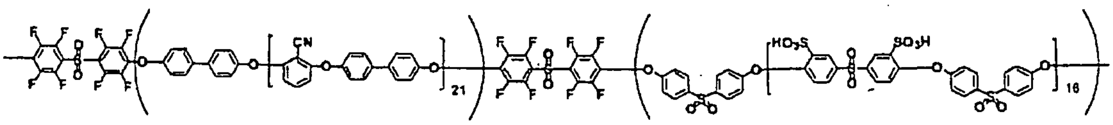

<Example 7>

The logarithmic viscosity of a polymer obtained in the same manner as in Example 2 using 20.00 g of hydrophilic oligomer b, 12.54 g of hydrophobic oligomer G, 0.29 g of potassium carbonate and 290 mL of NMP was 2.2 dL/g. From the obtained polymer, a proton exchange membrane G was obtained according to the aforementioned production method of proton exchange membrane. The chemical structure of the polymer constituting proton exchange membrane G is shown below.

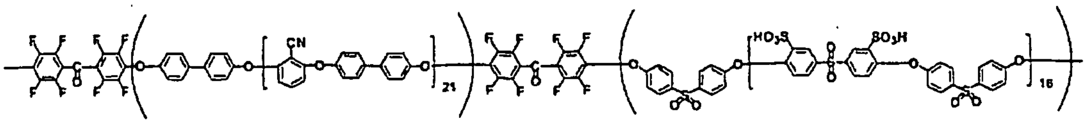

<Example 8>

The logarithmic viscosity of a polymer obtained in the same manner as in Example 2 using 20.00 g of hydrophilic oligomer b, 11.89 g of hydrophobic oligomer H, 0.29 g of potassium carbonate and 290 mL of NMP was 2.3 dL/g. From the obtained polymer, a proton exchange membrane H was obtained according to the aforementioned production method of proton exchange membrane. The chemical structure of the polymer constituting proton exchange membrane H is shown below.

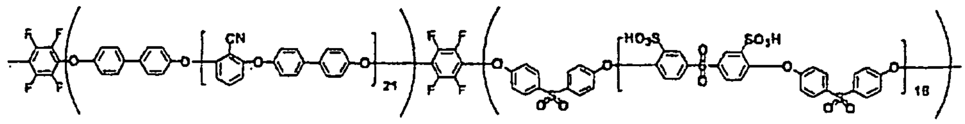

<Example 9>

The logarithmic viscosity of a polymer obtained in the same manner as in Example 2 using 20.00 g of hydrophilic oligomer c, 11.1 g of hydrophobic oligomer B 0.82 g of potassium carbonate, 1.73 g of decafluorobiphenyl and 300 mL

of NMP was 2.9 dL/g. From the obtained polymer, a proton exchange membrane I was obtained according to the aforementioned production method of proton exchange membrane. The chemical structure of the polymer constituting proton exchange membrane I is shown below.

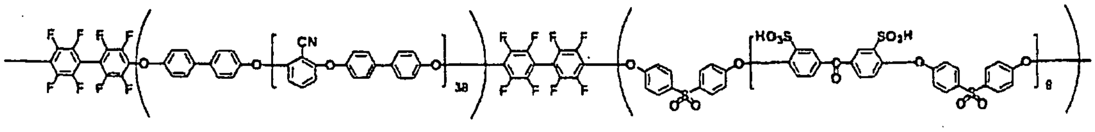

<Example 10>

The logarithmic viscosity of a polymer obtained in the same manner as in Example 2 using 20.00 g of hydrophilic oligomer d, 10.53 g of hydrophobic oligomer B, 0.82 g of potassium carbonate, 2.05 g of perfluorodiphenylsulfone and 290 mL of NMP was 2.6 dL/g. From the obtained polymer, a proton exchange membrane J was obtained according to the aforementioned production method of proton exchange membrane. The chemical structure of the polymer constituting proton exchange membrane J is shown below.

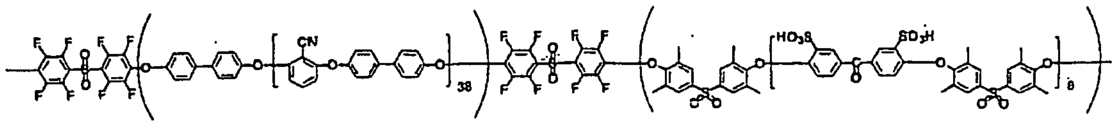

<Example 11>

The logarithmic viscosity of a polymer obtained in the same manner as in Example 2 using 20.00 g of hydrophilic oligomer e, 8.33 g of hydrophobic oligomer B, 0.74 g of potassium carbonate, 1.67 g of perfluorobenzophenone and 270 mL of NMP was 2.3 dL/g. From the obtained polymer, a proton exchange membrane K was obtained according to the aforementioned production method of proton exchange membrane. The chemical structure of the polymer constituting proton exchange membrane K is shown below.

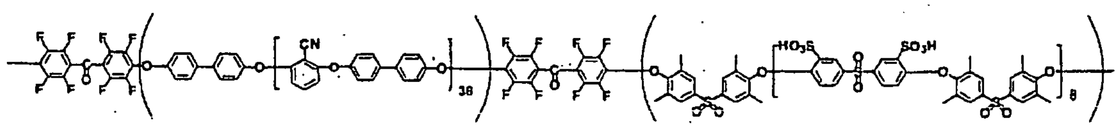

<Example 12>

The logarithmic viscosity of a polymer obtained in the same manner as in Example 1 using 20.00 g of hydrophilic oligomer e, 110.71 g of hydrophobic oligomer solution I, 0.75 g of potassium carbonate, 0.88 g of perfluorobenzene and 180 mL of NMP was 2.9 dL/g. From the obtained polymer, a proton exchange membrane L was obtained according to the aforementioned production method of proton exchange membrane. The chemical structure of the polymer constituting proton exchange membrane L is shown below.

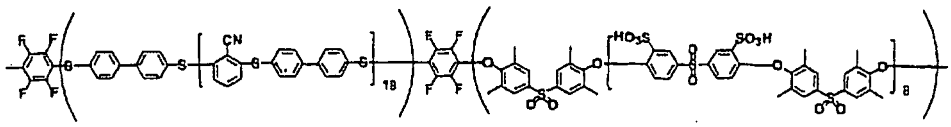

<Comparative Example 1>

The logarithmic viscosity of a polymer obtained in the same manner as in Example 1 using 76.67 g of hydrophilic oligomer solution f, 163.20 g of hydrophobic oligomer solution A, 0.69 g of potassium carbonate, 1.45 g of decafluorobiphenyl and 100 mL of NMP was 2.8 dL/g. From the obtained polymer, a proton exchange membrane m was obtained according to the aforementioned production method of proton exchange membrane. The chemical structure of the

polymer constituting proton exchange membrane m is shown below.

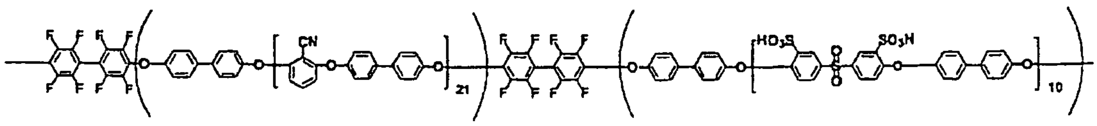

<Comparative Example 2>

The logarithmic viscosity of a polymer obtained in the same manner as in Example 2 using 20.00 g of hydrophilic oligomer g, 13.33 g of hydrophobic oligomer B, 0.63 g of potassium carbonate, 1.32 g of decafluorobiphenyl and 310 mL of NMP was 2.7 dL/g. From the obtained polymer, a proton exchange membrane n was obtained according to the aforementioned production method of proton exchange membrane. The chemical structure of the polymer constituting proton exchange membrane n is shown below.

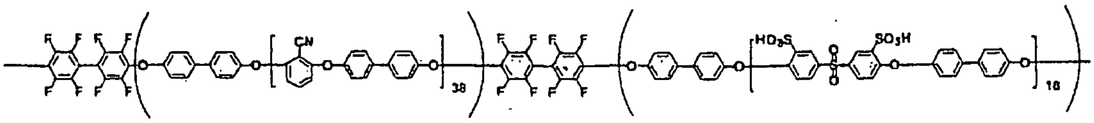

<Comparative Example 3>

A hydrophobic oligomer J and a hydrophilic oligomer h having the following structures were synthesized respectively in the same manner as in the synthesis examples described above except that the use material and the loading amount were varied.

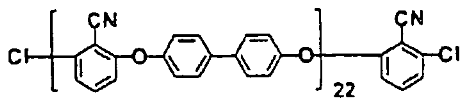

(Hydrophobic oligomer J number average molecular weight 6140)

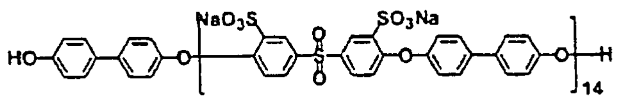

(Hydrophilic oligomer h number average molecular weight 8680)

The logarithmic viscosity of a polymer obtained in the same manner as in Example 1 except that 20.00 g of hydrophilic oligomer J, 14.25 g of hydrophobic oligomer h, 0.37 g of sodium carbonate and 310 mL of NMP were used, the reaction temperature was 160°C and the reaction time was 60 hours was 1.6 dL/g. From the obtained polymer, a proton exchange membrane o was obtained according to the aforementioned production method of proton exchange membrane. The chemical structure of the polymer constituting proton exchange membrane o is shown below.

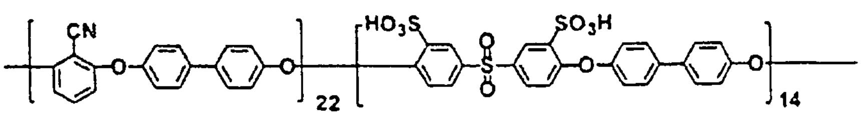

<Comparative Example 4>

A hydrophobic oligomer K was synthesized in the same manner as in the synthesis examples described above

except that the use material and the loading amount were varied.

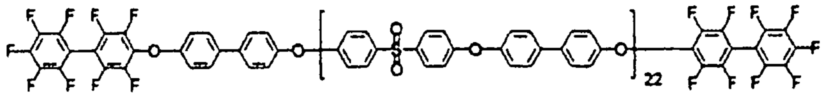

(Hydrophobic oligomer K number average molecular weight 6810)

The logarithmic viscosity of a polymer obtained in the same manner as in Example 1 using 20.00 g of hydrophilic oligomer h, 15.74 g of hydrophobic oligomer K, 0.37 g of sodium carbonate and 320 mL of NMP was 2.0 dL/g. From the obtained polymer, a proton exchange membrane p was obtained according to the aforementioned production method of proton exchange membrane. The chemical structure of the polymer constituting proton exchange membrane p is shown below.

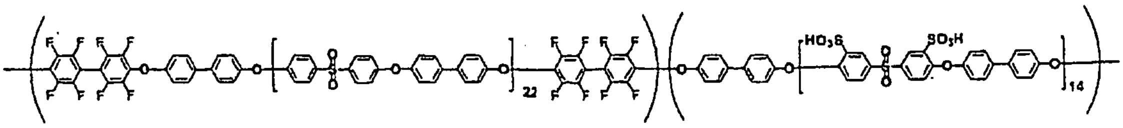

The evaluation results of the proton exchange membranes obtained in examples and comparative examples are shown in Table 1.

[Table 1]

| | Proton exchange membrane | Oligomer/number average molecular weight | | Membrane thickness (μm) | Ion exchange capacity (meq/g) | Proton conductivity (S/cm) | Swellability | |
|---|---|---|---|---|---|---|---|---|
| | | Hydrophilicity | Hydrophobicity | | | | Water absorption rate (wt%) | Area swelling (%) |
| Example 1 | A | a/6240 | A/6150 | 13 | 1.74 | 0.35 | 60 | 6 |
| Example 2 | B | b/10920 | B/11100 | 11 | 1.73 | 0.39 | 62 | 7 |
| Example 3 | C | a/6240 | C/5980 | 12 | 1.74 | 0.34 | 70 | 6 |
| Example 4 | D | a/6240 | D/6170 | 10 | 1.75 | 0.35 | 68 | 6 |
| Example 5 | E | b/10920 | E/6820 | 11 | 1.73 | 0.39 | 69 | 7 |
| Example 6 | F | b/10920 | F/6990 | 11 | 1.72 | 0.38 | 70 | 7 |
| Example 7 | G | b/10920 | G/6810 | 12 | 1.74 | 0.39 | 68 | 8 |
| Example 8 | H | b/10920 | H/6530 | 13 | 1.70 | 0.38 | 68 | 7 |
| Example 9 | I | c/5950 | B/11100 | 12 | 1.75 | 0.35 | 70 | 6 |
| Example 10 | J | d/5850 | B/11100 | 11 | 1.71 | 0.36 | 65 | 6 |
| Example 11 | K | e/6070 | B/11100 | 12 | 1.72 | 0.35 | 66 | 6 |
| Example 12 | L | e/6070 | I/596 | 11 | 1.75 | 0.35 | 67 | 7 |
| Comparative Example 1 | m | f/6240 | A/6150 | 13 | 1.76 | 0.25 | 85 | 9 |
| Comparative Example 2 | n | g/11020 | B/11100 | 10 | 1.78 | 0.27 | 88 | 10 |
| Comparative Example 3 | o | h/8680 | J/6140 | 11 | 1.77 | 0.26 | 85 | 36 |
| Comparative Example 4 | p | h/8680 | K/6810 | 13 | 1.76 | 0.25 | 151 | 28 |

<Example 25: Evaluation of electric generation of fuel cell using hydrogen as fuel (PEFC), using proton exchange membrane of Example 1>

After adding commercially available 40% Pt catalyst-bearing carbon (Tanaka Kikinzoku Kogyo Co. Ltd., catalyst for use in fuel cells TECl 0V40E) and a small amount of ultrapure water and isopropanol into a solution of 20% Nafion (trade name) available from Du Pont, the solution was stirred until it was uniform, to prepare a catalyst paste. This catalyst paste was uniformly applied and dried on carbon paper TGPH-060 available from TORAY INDUSTRIES, INC., so that the adhesion amount of platinum was 0.5 mg/cm$^2$, to prepare a gas diffusion layer with an electrode catalyst layer. A polymer electrolyte membrane was sandwiched between the foregoing gas diffusion layers with an electrode catalyst layer so that the electrode catalyst layer was in contact with the membrane, and pressed and heated at 200°C, 8MPa for 3 minutes by a hot press method, to form a membrane electrode assembly. This assembly was incorporated into a fuel battery cell for evaluation, FC25-02SP available from Electrochem and the anode and the cathode were respectively supplied with hydrogen and air humidified at 72°C, and electric generation characteristics was evaluated. An output voltage at a current density directly after starting of 0.5 A/cm$^2$ was regarded as initial output. Continuous operation was conducted in the foregoing conditions while measuring an open circuit voltage five times per an hour for evaluating the durability. The initial voltage in evaluation of the PEFC electric generation using proton exchange membrane A of Example 1 was 0.69V, and a decrease in open circuit voltage after a lapse of 3000 hours was 3%.

<Example 26: Evaluation of electric generation of fuel cell using hydrogen as fuel (PEFC), using proton exchange membrane of Example 9>

Durability evaluation was conducted in the same manner as in Example 25 except that proton exchange membrane I obtained in Example 9 was used as a proton exchange membrane. The initial voltage was 0.69V, and a decrease in open circuit voltage after a lapse of 3000 hours was 2%.

<Comparative Example 9>

The electric generation of PEFC was evaluated in the same manner as in Example 25 using the proton exchange membrane of Comparative Example 1, and the result was inferior to those of Example 25 and Example 26 as evidenced from an initial voltage of 0.70V, and a decrease in open circuit voltage after a lapse of 3000 hours of 9%.

<Example 13>

First, 75.77 g of hydrophilic oligomer solution i and 137.52 g of hydrophobic oligomer solution L were charged into a 500-mL branched flask attached with a nitrogen introducing tube, a stirring blade, a Dean-Stark trap and a thermometer, and mixed, and stirred at room temperature under a nitrogen gas flow for 1 hour. Then 0.70 g of potassium carbonate, 1.48 g of decafluorobiphenyl and 105 mL of NMP were added, and stirred at room temperature for another 1 hour, and then heated to 110°C to allow reaction to proceed for 8 hours. Thereafter, the reaction was cooled to room temperature, and added dropwise into 2 L of pure water to make the polymer solidify. After washing with pure water three times, the reaction was treated at 80°C for 16 hours while it was dipped in pure water, and then the pure water was removed and washed with hot water. Then the hot water washing was repeated again. Further the polymer from which water was removed was dipped in a mixed solvent of 600 mL of isopropanol and 300 mL of water at room temperature for 16 hours, and the polymer was taken out and washed. The same operation was conducted one more time. Then the polymer was separated by filtration, and dried under reduced pressure at 120°C for 12 hours, and the logarithmic viscosity of the obtained polymer was 2.7 dL/g. From the obtained polymer, a proton exchange membrane Q was obtained according to the aforementioned production method of proton exchange membrane. The chemical structure of the polymer constituting proton exchange membrane Q is shown below.

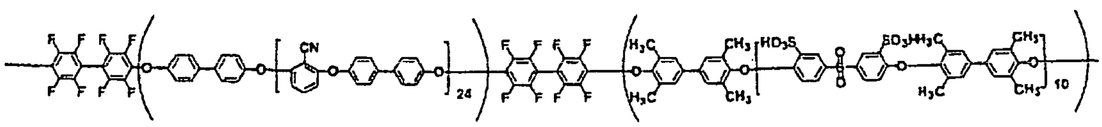

<Example 14>

First, 20.00 g of hydrophilic oligomer j and 11.11 g of hydrophobic oligomer M were charged into a 500-mL

branched flask attached with a nitrogen introducing tube, a stirring blade, a Dean-Stark trap and a thermometer, and added with 290 mL of NMP and stirred under a nitrogen gas flow at 50°C for 7 hours. Then 0.41 g of sodium carbonate and 0.86 g of decafluorobiphenyl were added, and stirred at room temperature for 1 hour, and then the same operation as in Example 13 was conducted. The logarithmic viscosity of the obtained polymer was 2.6 dL/g. From the obtained polymer, a proton exchange membrane R was obtained according to the aforementioned production method of proton exchange membrane. The chemical structure of the polymer constituting proton exchange membrane R is shown below.

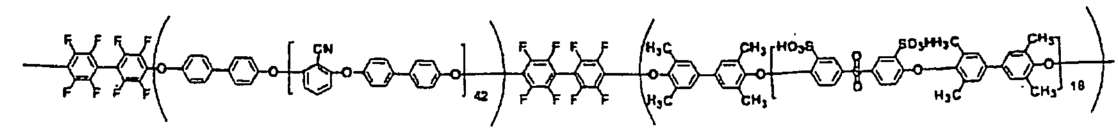

<Example 15>

The logarithmic viscosity of a polymer obtained in the same manner as in Example 13 using 75.77 g of hydrophilic oligomer solution i, 126.01 g of hydrophobic oligomer solution N, 0.71 g of potassium carbonate, 1.49 g of decafluorobiphenyl, and 115 mL of NMP was 2.9 dL/g. From the obtained polymer, a proton exchange membrane S was obtained according to the aforementioned production method of proton exchange membrane. The chemical structure of the polymer constituting proton exchange membrane S is shown below.

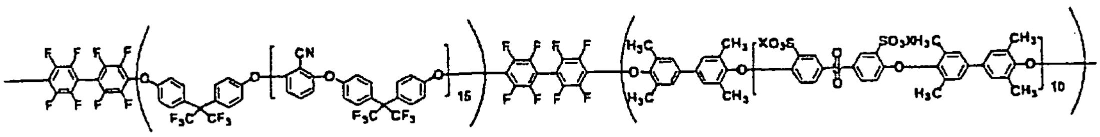

<Example 16>

The logarithmic viscosity of a polymer obtained in the same manner as in Example 13 using 75.77 g of hydrophilic oligomer solution i, 126.85 g of hydrophobic oligomer solution O, 0.70 g of potassium carbonate, 1.48 g of decafluorobiphenyl, and 115 mL of NMP was 2.5 dL/g. From the obtained polymer, a proton exchange membrane T was obtained according to the aforementioned production method of proton exchange membrane. The chemical structure of the polymer constituting proton exchange membrane T is shown below.

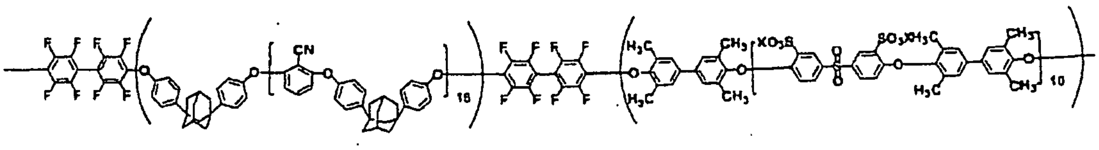

<Example 17>

The logarithmic viscosity of a polymer obtained in the same manner as in Example 14 using 20.00 g of hydrophilic oligomer j, 12.63 g of hydrophobic oligomer P, 0.26 g of potassium carbonate, and 300 mL of NMP was 2.8 dL/g. From the obtained polymer, a proton exchange membrane U was obtained according to the aforementioned production method of proton exchange membrane. The chemical structure of the polymer constituting proton exchange membrane U is shown below.

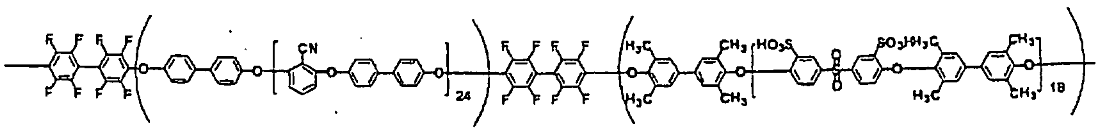

<Example 18>

The logarithmic viscosity of a polymer obtained in the same manner as in Example 14 using 20.00 g of hydrophilic oligomer j, 12.37 g of hydrophobic oligomer Q, 0.26 g of potassium carbonate, and 300 mL of NMP was 3.1 dL/g. From the obtained polymer, a proton exchange membrane V was obtained according to the aforementioned production method of proton exchange membrane. The chemical structure of the polymer constituting proton exchange membrane V is shown below.

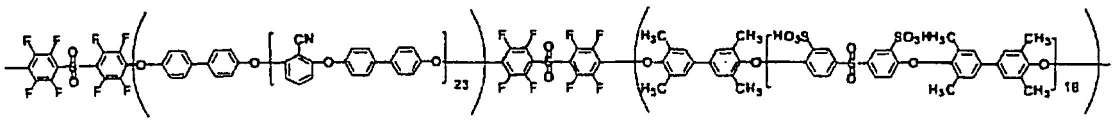

<Example 19>

The logarithmic viscosity of a polymer obtained in the same manner as in Example 14 using 20.00 g of hydrophilic oligomer j, 12.25 g of hydrophobic oligomer R, 0.26 g of potassium carbonate, and 300 mL of NMP was 2.4 dL/g. From the obtained polymer, a proton exchange membrane W was obtained according to the aforementioned production method of proton exchange membrane. The chemical structure of the polymer constituting proton exchange membrane W is shown below.

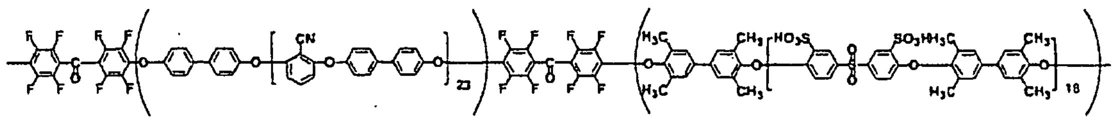

<Example 20>

The logarithmic viscosity of a polymer obtained in the same manner as in Example 14 using 20.00 g of hydrophilic oligomer j, 12.14 g of hydrophobic oligomer S, 0.26 g of potassium carbonate, and 300 mL of NMP was 2.2 dL/g. From the obtained polymer, a proton exchange membrane X was obtained according to the aforementioned production method of proton exchange membrane. The chemical structure of the polymer constituting proton exchange membrane X is shown below.

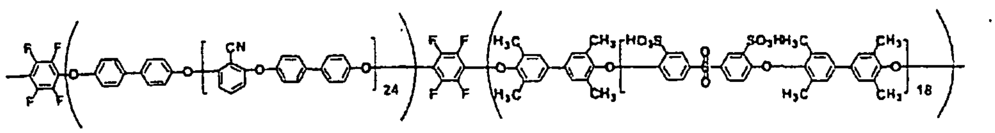

<Example 21 >

The logarithmic viscosity of a polymer obtained in the same manner as in Example 14 using 20.00 g of hydrophilic oligomer k, 12.50 g of hydrophobic oligomer M, 0.43 g of potassium carbonate, 0.89 g of decafluorobiphenyl, and 300 mL of NMP was 2.8 dL/g. From the obtained polymer, a proton exchange membrane Y was obtained according to the aforementioned production method of proton exchange membrane. The chemical structure of the polymer constituting proton exchange membrane Y is shown below.

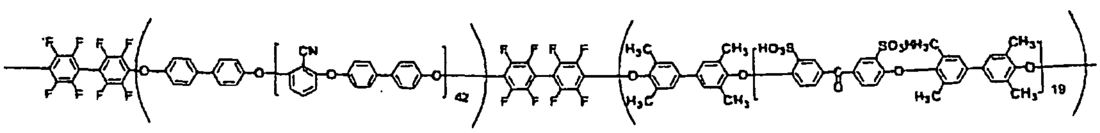

<Example 22>

The logarithmic viscosity of a polymer obtained in the same manner as in Example 14 using 20.00 g of hydrophilic oligomer 1, 12.50 g of hydrophobic oligomer M, 0.42 g of potassium carbonate, 1.06 g of perfluorodiphenylsulfone, and 300 mL of NMP was 2.3 dL/g. From the obtained polymer, a proton exchange membrane Z was obtained according to the aforementioned production method of proton exchange membrane. The chemical structure of the polymer constituting proton exchange membrane Z is shown below.

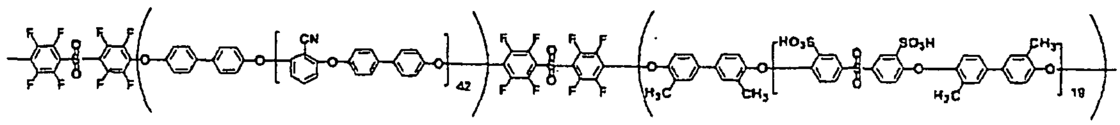

<Example 23>

The logarithmic viscosity of a polymer obtained in the same manner as in Example 14 using 20.00 g of hydrophilic oligomer m, 10.53 g of hydrophobic oligomer M, 0.40 g of potassium carbonate, 0.91 g of perfluorobenzophenone, and 290 mL of NMP was 2.6 dL/g. From the obtained polymer, a proton exchange membrane AA was obtained according to the aforementioned production method of proton exchange membrane. The chemical structure of the polymer constituting proton exchange membrane AA is shown below.

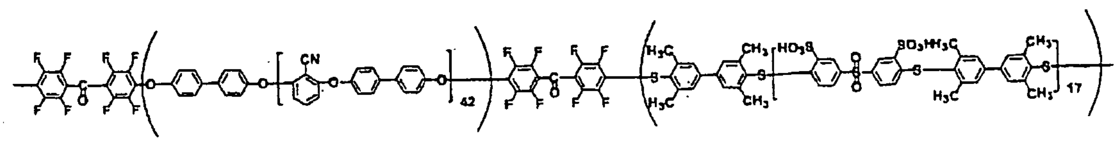

<Example 24>

The logarithmic viscosity of a polymer obtained in the same manner as in Example 14 using 20.00 g of hydrophilic oligomer m, 134.13 g of hydrophobic oligomer solution T, 0.51 g of potassium carbonate, 0.59 g of perfluorobenzene, and 175 mL of NMP was 2.2 dL/g. From the obtained polymer, a proton exchange membrane BB was obtained according to the aforementioned production method of proton exchange membrane. The chemical structure of the polymer constituting proton exchange membrane BB is shown below.

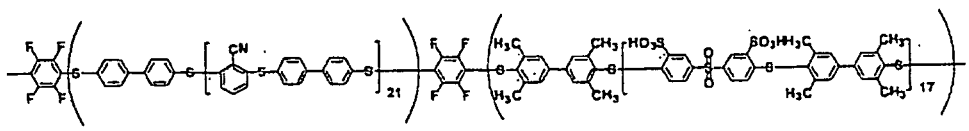

<Comparative Example 5>

The logarithmic viscosity of a polymer obtained in the same manner as in Example 13 using 76.65 g of hydrophilic oligomer solution n, 174.19 g of hydrophobic oligomer solution L, 0.77 g of potassium carbonate, 1.61 g of decafluorobiphenyl, and 95 mL of NMP was 2.4 dL/g. From the obtained polymer, a proton exchange membrane cc was obtained according to the aforementioned production method of proton exchange membrane. The chemical structure of the polymer constituting proton exchange membrane cc is shown below.

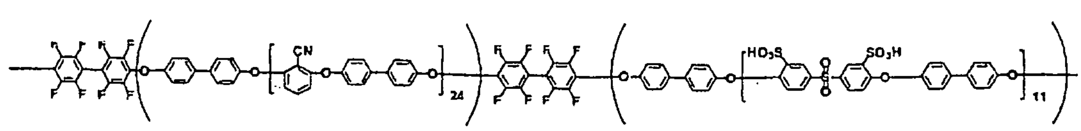

<Comparative Example 6>

The logarithmic viscosity of a polymer obtained in the same manner as in Example 14 using 20.00 g of hydrophilic oligomer o, 14.29 g of hydrophobic oligomer M, 0.45 g of potassium carbonate, 0.94 g of decafluorobiphenyl, and 315 mL of NMP was 2.8 dL/g. From the obtained polymer, a proton exchange membrane dd was obtained according to the aforementioned production method of proton exchange membrane. The chemical structure of the polymer constituting proton exchange membrane dd is shown below.

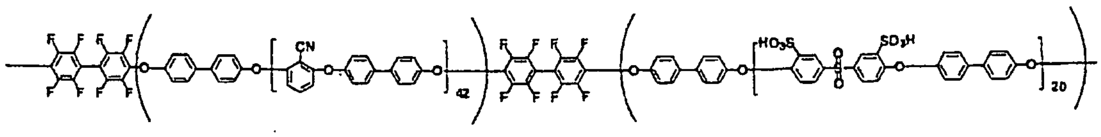

<Comparative Example 7>

A hydrophobic oligomer U and a hydrophilic oligomer p having the following structures were respectively synthesized in the same manner as in the synthesis examples described above except that the use material and the loading amount were varied.

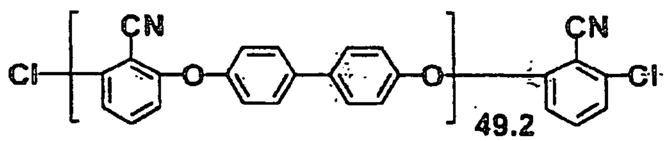

(hydrophobic oligomer J number average molecular weight 14210)

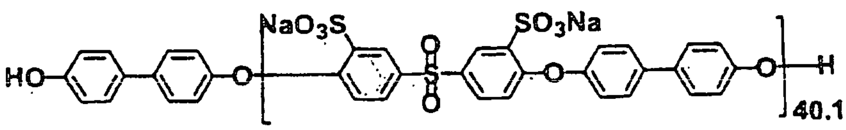

(hydrophilic oligomer h number average molecular weight 24100)

The logarithmic viscosity of a polymer obtained in the same manner as in Example 1 except that 44.06 g of hydrophilic oligomer p, 23.89 g of hydrophobic oligomer U, 0.47 g of sodium carbonate, and 380 mL of NMP were used, the reaction temperature was 160°C, and the reaction time was 60 hours was 1.5 dL/g. From the obtained polymer, a proton exchange membrane ee was obtained according to the aforementioned production method of proton exchange membrane. The chemical structure of the polymer constituting proton exchange membrane ee is shown below.

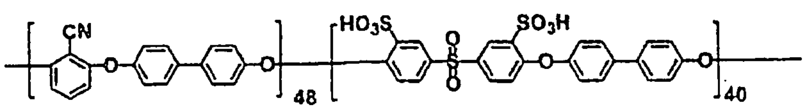

<Comparative Example 8>

A hydrophobic oligomer V having the following structure was synthesized in the same manner as in the synthesis examples described above except that the use material and the loading amount were varied.

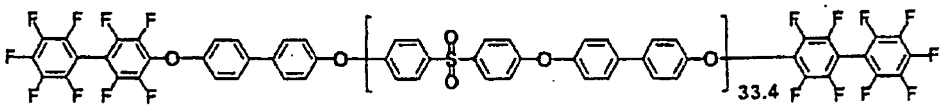

(hydrophobic oligomer V number average molecular weight 14170)

The logarithmic viscosity of a polymer obtained in the same manner as in Example 2 using 44.06 g of hydrophilic oligomer p, 23.87 g of hydrophobic oligomer V, 0.47 g of sodium carbonate, and 380 mL of NMP was 1.2 dL/g. From the obtained polymer, a proton exchange membrane ff was obtained according to the aforementioned production method of proton exchange membrane. The chemical structure of the polymer constituting proton exchange membrane ff is shown below.

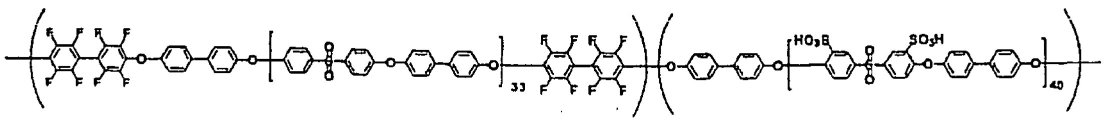

The evaluation results of the proton exchange membranes obtained in examples and comparative examples are shown in Table 2.

[Table 2]

| | Proton exchange membrane | Oligomer/number average molecular weight | | Membrane thickness (μm) | Ion exchange capacity (meq/g) | Proton conductivity (S/cm) | Swellability | |
|---|---|---|---|---|---|---|---|---|
| | | Hydrophilicity | Hydrophobicity | | | | Water absorption rate (wt%) | Area swelling (%) |
| Example 13 | Q | i/6890 | L/7050 | 12 | 1.64 | 0.25 | 60 | 5 |
| Example 14 | R | j/12100 | M/12150 | 12 | 1.67 | 0.24 | 62 | 6 |
| Example 15 | S | i/6890 | N/6890 | 11 | 1.66 | 0.26 | 70 | 6 |
| Example 16 | T | i/6890 | O/7030 | 10 | 1.64 | 0.26 | 68 | 6 |
| Example 17 | U | j/12100 | P/7690 | 11 | 1.63 | 0.25 | 69 | 7 |
| Example 18 | V | j/12100 | Q/7440 | 12 | 1.67 | 0.24 | 70 | 6 |
| Example 19 | W | j/12100 | R/7420 | 11 | 1.68 | 0.25 | 68 | 6 |
| Example 20 | X | j/12100 | S/7320 | 12 | 1.70 | 0.25 | 68 | 6 |
| Example 21 | Y | k/12140 | M/12150 | 12 | 1.65 | 0.24 | 70 | 7 |
| Example 22 | Z | 1/12220 | M/12150 | 11 | 1.66 | 0.26 | 65 | 7 |
| Example 23 | AA | m/12000 | M/12150 | 11 | 1.67 | 0.25 | 66 | 6 |
| Example 24 | BB | m/12000 | T/6900 | 12 | 1.68 | 0.24 | 67 | 6 |
| Comparative Example 5 | cc | n/6820 | L/7050 12 | | 1.61 | 0.21 | 83 | 9 |
| Comparative Example 6 | dd | o/12300 | M/12150 | 11 | 1.62 | 0.22 | 85 | 10 |
| Comparative Example 7 | ee | p/24100 | U/14210 | 10 | 1.84 | 0.23 | 94 | 34 |
| Comparative Example 8 | ff | p/24100 | V/14170 | 12 | 1.71 | 0.21 | 140 | 24 |

<Example 27: Evaluation of electric generation of fuel cell using hydrogen as fuel (PEFC), using proton exchange membrane of Example 13>

After adding commercially available 40% Pt catalyst-bearing carbon (Tanaka Kikinzoku Kogyo Co. Ltd., catalyst for use in fuel cells TEC10V40E) and a small amount of ultrapure water and isopropanol into a solution of 20% Nafion (trade name) available from Du Pont, the solution was stirred until it was uniform, to prepare a catalyst paste. This catalyst paste was uniformly applied and dried on carbon paper TGPH-060 available from TORAY INDUSTRIES, INC., so that the adhesion amount of platinum was 0.5 $mg/cm^2$, to prepare a gas diffusion layer with an electrode catalyst layer. A polymer electrolyte membrane was sandwiched between the foregoing gas diffusion layers with an electrode catalyst layer so that the electrode catalyst layer was in contact with the membrane, and pressed and heated at 200°C, 8MPa for 3 minutes by a hot press method, to form a membrane electrode assembly. This assembly was incorporated into a fuel battery cell for evaluation, FC25-02SP available from Electrochem and the anode and the cathode were respectively supplied with hydrogen and air humidified at 72°C, and electric generation characteristics was evaluated. An output voltage at a current density directly after starting of 0.5 $A/cm^2$ was regarded as initial output. Continuous operation was conducted in the foregoing conditions while measuring an open circuit voltage five times per an hour for evaluating the durability. The initial voltage in evaluation of the PEFC electric generation using proton exchange membrane A of Example 13 was 0.69V, and a decrease in open circuit voltage after a lapse of 3000 hours was 2%.

<Comparative Example 10>

The electric generation of PEFC was evaluated in the same manner as in Example 27 using the proton exchange membrane of Comparative Example 1, and the result was inferior to that of Example 13 as evidenced from an initial voltage of 0.70V, and a decrease in open circuit voltage after a lapse of 3000 hours of 10%.

INDUSTRIAL APPLICABILITY

From the above description, it is revealed that the proton exchange membrane of the present invention is a proton exchange membrane showing smaller area swelling and excellent dimension stability although it exhibits proton conductivity comparable to or better than that of the proton exchange membrane of comparative example having a different structure, and inhibits a decrease in output during a long-term operation, when it is used as a proton exchange membrane of a fuel cell. This is attributable to the hydrophilic segment structure of the polymer constituting the proton exchange membrane of the present invention. The sulfonic acid group-containing segmented block polymer of the present invention can be used as a proton exchange membrane for use in fuel cells capable of exhibiting high output and high durability, and will greatly contribute to development of industry.

## Claims

1. A sulfonic acid group-containing segmented block copolymer, which is a di- or multi-block copolymer comprising, within a molecule, at least one kind of hydrophilic segment and at least one kind of hydrophobic segment, a 0.5 g/dL solution thereof dissolved in N-methyl-2-pyrrolidone as a solvent showing a logarithmic viscosity measured at 30°C in the range of 0.5 to 5.0 dL/g, wherein
the copolymer has at least one kind of hydrophobic segment represented by Chemical Formula 1:

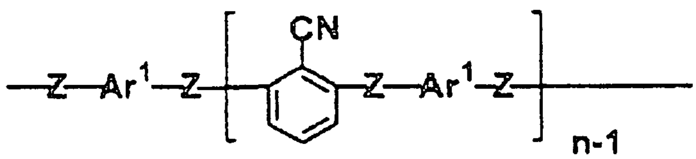

(Chemical Formula 1)

(wherein, Z independently represents an O or S atom, $Ar^1$ represents a divalent aromatic group, and n represents a number of 2 to 100),
the segment has a structure bound to a group represented by Chemical Formula 2 described below:

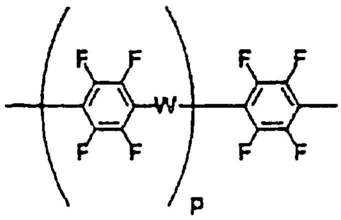

(Chemical Formula 2)

(wherein, p represents 0 or 1, and when p is 1, W represents at least one kind of group selected from the group consisting of a direct bond between benzene rings, a sulfone group, and a carbonyl group), and
the hydrophilic segment has at least one kind of structure represented by Chemical Formula 3-1 described below:

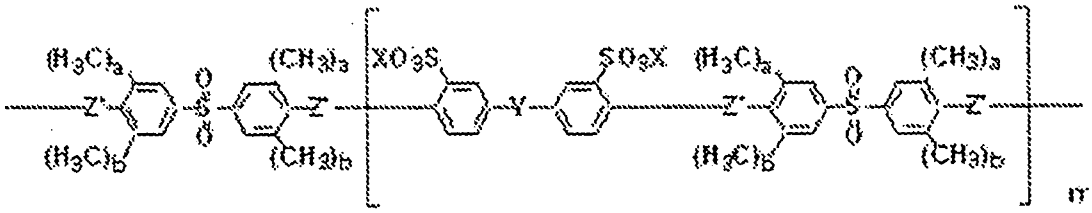

(Chemical Formula 3-1)

(wherein, X represents H or a monovalent positive ion, Y represents a sulfone group or a carbonyl group, Z' independently represents an O or S atom, m represents an integer of 2 to 100, a represents 0 or 1, and b represents 0 or 1).

**2.** The sulfonic acid group-containing segmented block copolymer according to claim 1, wherein both a and b are 0.

**3.** A sulfonic acid group-containing segmented block copolymer, which is a di- or multi-block copolymer comprising, within a molecule, at least one kind of hydrophilic segment and at least one kind of hydrophobic segment, a 0.5 g/dL solution thereof dissolved in N-methyl-2-pyrrolidone as a solvent showing a logarithmic viscosity measured at 30°C in the range of 0.5 to 5.0 dL/g, wherein
the copolymer has at least one kind of hydrophobic segment represented by Chemical Formula 1 described below:

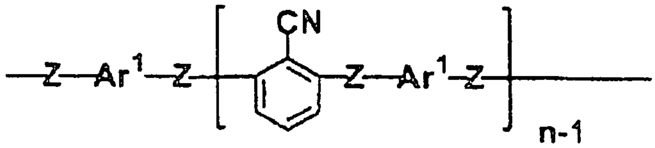

(Chemical Formula 1)

(wherein, Z independently represents an O or S atom, $Ar^1$ represents a divalent aromatic group, and n represents a number of 2 to 100),
the segment has a structure bound to a group represented by Chemical Formula 2 described below:

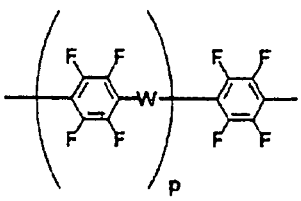

(Chemical Formula 2)

(wherein, p represents 0 or 1, and when p is 1, W represents at least one kind of group selected from the group consisting of a direct bond between benzene rings, a sulfone group, and a carbonyl group), and

the hydrophilic segment has at least one kind of structure represented by Chemical Formula 3-2 described below:

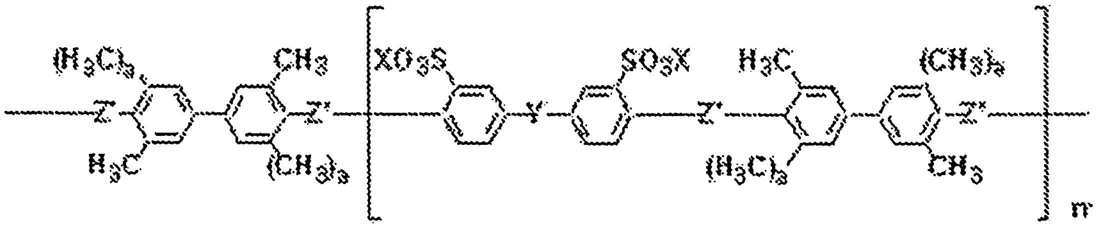

(Chemical Formula 3-2)

(wherein, X represents H or a monovalent positive ion, Y represents a sulfone group or a carbonyl group, Z' independently represents an O or S atom, m represents a number of 2 to 100, and a represents 0 or 1).

**4.** The sulfonic acid group-containing segmented block copolymer according to claim 3, wherein a is 1.

**5.** The sulfonic acid group-containing segmented block copolymer according to any one of claims 1 to 4, wherein $Ar^1$ is a structure represented by Chemical Formula 4 described below:

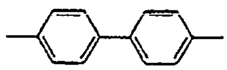

(Chemical Formula 4)

**6.** The sulfonic acid group-containing segmented block copolymer according to any one of claims 1 to 5, wherein at least either of Z and Z' is an O atom.

**7.** The sulfonic acid group-containing segmented block copolymer according to claim 6, wherein both Z and Z' are O atoms.

**8.** The sulfonic acid group-containing segmented block copolymer according to any one of claims 1 to 7, wherein W is a direct bond between benzene rings.

**9.** The sulfonic acid group-containing segmented block copolymer according to any one of claims 1 to 8, wherein n is in the range of 8 to 50.

**10.** The sulfonic acid group-containing segmented block copolymer according to claim 9, wherein m is in the range of 3 to 20.

**11.** The sulfonic acid group-containing segmented block copolymer according to claim 10, wherein both an average value of number average molecular weight of hydrophilic segment (A) and an average value of number average molecular weight of hydrophobic segment (B) are in the range of 3000 to 12000, and A/B is in the range of 0.7 to 1.3.

**12.** A proton exchange membrane for use in fuel cells comprising the sulfonic acid group-containing segmented block copolymer according to any one of claims 1 to 11.

**13.** A membrane electrode assembly using the proton exchange membrane for use in fuel cells according to claims 12.

**14.** A fuel cell using the membrane electrode assembly according to claim 13.

FIG.1

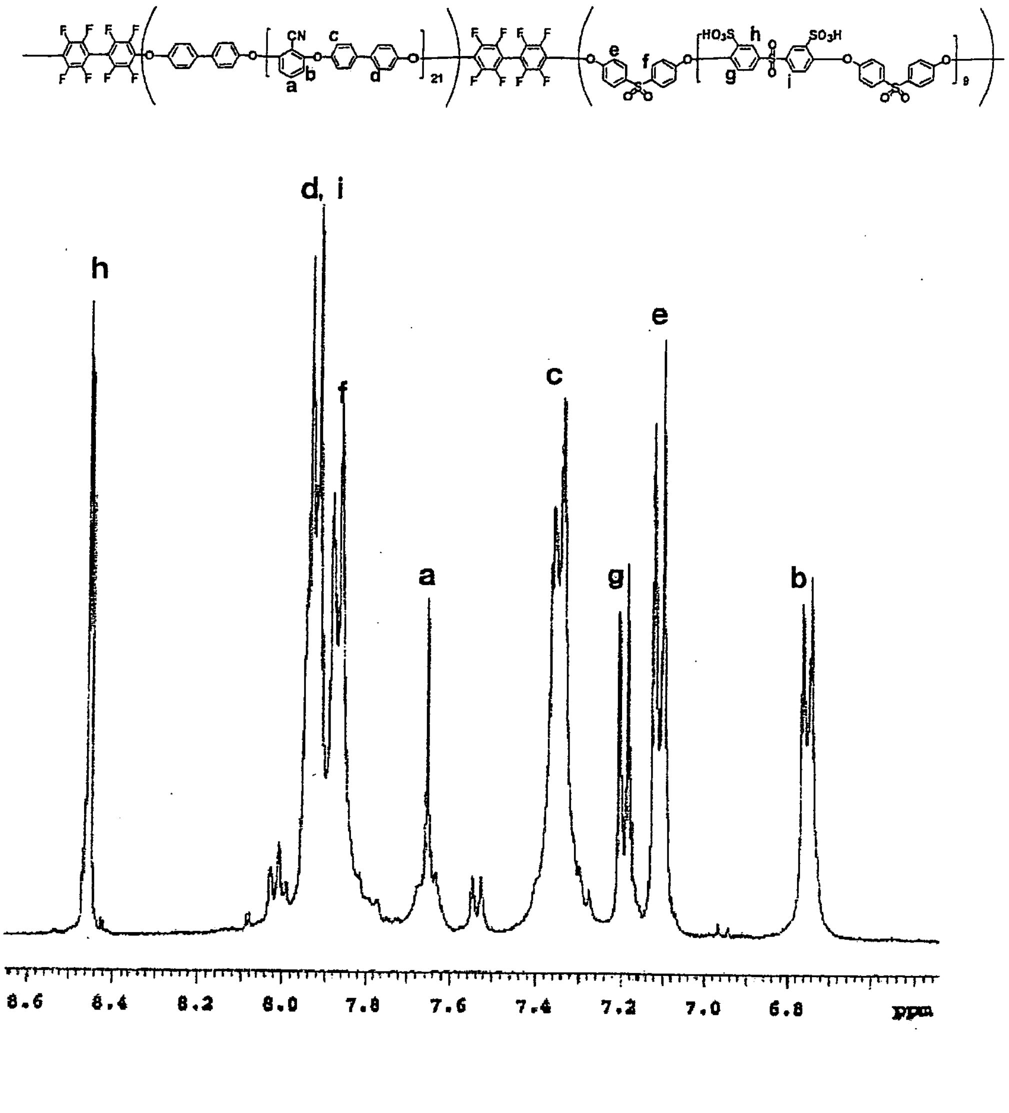

FIG.2

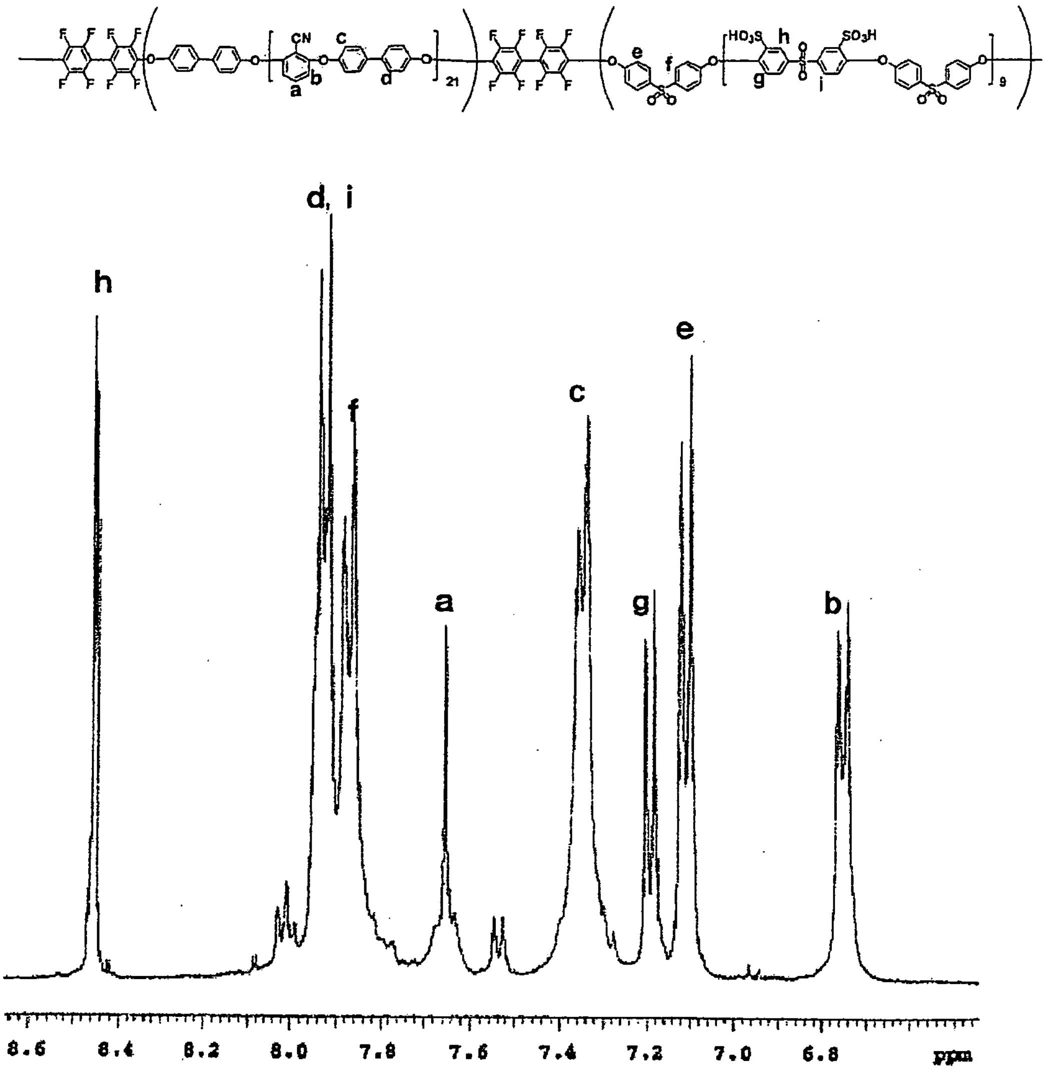

**INTERNATIONAL SEARCH REPORT**

International application No.
PCT/JP2010/063077

A. CLASSIFICATION OF SUBJECT MATTER
*C08G81/00*(2006.01)i, *C08G65/34*(2006.01)i, *C08G75/23*(2006.01)i, *H01B1/06*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
C08G81/00-85/00, C08G65/00-67/04, C08G75/00-75/32, H01B1/00-1/24, H01M8/00-8/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CA/REGISTRY(STN), JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2004-190003 A (Sumitomo Chemical Co., Ltd.), 08 July 2004 (08.07.2004), claims; examples & US 2006/0182678 A1 & EP 1555282 A1 & WO 2004/035662 A1 & CA 2502202 A & KR 10-2005-0056240 A & CN 1723233 A & AU 2003271183 A | 1-14 |
| A | WO 2008/38612 A2 (ADVENT TECHNOLOGIES), 03 April 2008 (03.04.2008), Claims; examples 1 to 6 & JP 2008-108717 A & US 2010/0039041 A & EP 2063454 A1 & KR 10-2009-0043577 A & CN 101517698 A | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 October, 2010 (28.10.10) | 16 November, 2010 (16.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/063077

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-74946 A (Toyobo Co., Ltd.), 03 April 2008 (03.04.2008), claims; examples (Family: none) | 1-14 |
| A | WO 2008/038702 A1 (Toyobo Co., Ltd.), 03 April 2008 (03.04.2008), claims; examples (Family: none) | 1-14 |
| A | JP 2008-146975 A (Toyobo Co., Ltd.), 26 June 2008 (26.06.2008), claims; examples (Family: none) | 1-14 |
| A | JP 2008-37897 A (Toyobo Co., Ltd.), 21 February 2008 (21.02.2008), claims; examples (Family: none) | 1-14 |
| A | JP 2006-206809 A (Toyobo Co., Ltd.), 10 August 2006 (10.08.2006), claims; examples (Family: none) | 1-14 |
| P,A | JP 2010-129292 A (Kaneka Corp.), 10 June 2010 (10.06.2010), claims; examples (Family: none) | 1-14 |
| E,A | JP 2010-170935 A (Toyobo Co., Ltd.), 05 August 2010 (05.08.2010), claims; examples (Family: none) | 1-14 |
| P,A | WO 2009/136631 A1 (Toyobo Co., Ltd.), 12 November 2009 (12.11.2009), claims; examples (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 20020091225 A
- JP 63258930 A
- JP 2006291046 A
- JP 2001250567 A
- JP 2001278978 A
- JP 2003031232 A
- JP 2004190003 A
- JP 2007515513 A
- JP 2005126684 A
- JP 2006176666 A
- JP 2009058665 W

### Non-patent literature cited in the description

- Sulfonated Polysulfone as Promising Membranes for Polymer Electrolyte Fuel Cells. **F. Lufrano.** Journal of Applied Polymer Science. John Wiley & Sons, Inc, 2000, vol. 77, 1250-1257
- Hydrophilic-hydrophobic multiblock copolymers based on poly(arylene ether sulfone) via low-temperature coupling reactions for proton exchange membrane fuel cells. **Hae-Seung Lee ; Abhishek Roy ; Ozma Lane ; Stuart Dunn ; James E.** Polymer, U.S. Elsevier Ltd, 2008, vol. 49, 715-723